# EUROPÄISCHE PATENTSCHRIFT

(11) **EP 3 469 680 B1**
(45) Veröffentlichungstag und Bekanntmachung des Hinweises auf die Patenterteilung: **31.05.2023**
(21) Anmeldenummer: 17745293.5
(22) Anmeldetag: 18.07.2017
(51) Int. Cl.: H02J 3/38

(54) **VERFAHREN, COMPUTER-PROGRAMM-PRODUKT, VORRICHTUNG UND "ENERGIE-CLUSTER-SERVICE"-SYSTEM ZUM MANAGEN VON REGELZIELEN, INSBESONDERE LASTAUSGLEICHEN, BEI DER STEUERUNG DER VERSORGUNG, UMWANDLUNG, SPEICHERUNG, EINSPEISUNG, VERTEILUNG UND/ODER DES VERBRAUCHS VON ENERGIE IN EINEM ENERGIENETZ**
METHOD, COMPUTER PROGRAM PRODUCT, DEVICE, AND ENERGY CLUSTER SERVICE SYSTEM FOR MANAGING CONTROL TARGETS, IN PARTICULAR LOAD BALANCING PROCESSES, WHEN CONTROLLING THE SUPPLY, CONVERSION, STORAGE, FEED, DISTRIBUTION, AND/OR USE OF ENERGY IN AN ENERGY NETWORK
PROCÉDÉ, PRODUIT PROGRAMME INFORMATIQUE, DISPOSITIF ET SYSTÈME DE 'SERVICE DE CLUSTER ÉNERGÉTIQUE' POUR GÉRER DES OBJECTIFS DE RÉGULATION, NOTAMMENT DE COMPENSATION DE CHARGE, LORS DE LA COMMANDE DE L'APPROVISIONNEMENT, DE LA CONVERSION, DU STOCKAGE, DE L'ALIMENTATION, DE LA DISTRIBUTION ET/OU DE LA CONSOMMATION D'ÉNERGIE DANS UN RÉSEAU D'ÉNERGIE

(30) Priorität: 18.07.2016 DE 102016213080
(43) Veröffentlichungstag der Anmeldung: 17.04.2019
(73) Patentinhaber: Siemens Aktiengesellschaft, 80333 München (DE)
(72) Erfinder: MLADENOVIC, Ivana, 90556 Seukendorf (DE); WEINDL, Christian, 96450 Coburg (DE)
(74) Vertreter: Siemens Patent Attorneys
(86) Internationale Anmeldenummer: PCT/EP2017/068102
(87) Internationale Veröffentlichungsnummer: WO 2018/015376

(56) Entgegenhaltungen:
- DE-A1-102014 217 930
- US-A1- 2010 217 550
- US-A1- 2014 297 206
- A-H MOHSENIAN-RAD ET AL: "Optimal and autonomous incentive-based energy consumption scheduling algorithm for smart grid", INNOVATIVE SMART GRID TECHNOLOGIES (ISGT), 2010, IEEE, PISCATAWAY, NJ, USA, 19. Januar 2010 (2010-01-19), Seiten 1-6, XP031650357, ISBN: 978-1-4244-6264-3

## Beschreibung

Die Erfindung bezieht sich auf ein Verfahren zum Managen von Regelzielen, insbesondere Lastausgleichen, in einem Energienetz gemäß dem Oberbegriff des Patentanspruches 1, ein Computer-Programm-Produkt zum Managen von Regelzielen, insbesondere Lastausgleichen, in einem Energienetz gemäß dem Oberbegriff des Patentanspruches 4, eine Vorrichtung zum Managen von Regelzielen, insbesondere Lastausgleichen, in einem Energienetz gemäß dem Oberbegriff des Patentanspruches 7 und ein "Energie-Cluster-Service"-System zum Managen von Regelzielen, insbesondere Lastausgleichen, in einem Energienetz gemäß dem Oberbegriff des Patentanspruches 12.

Die Steuerung von Versorgung, Umwandlung, Speicherung, Einspeisung, Verteilung und/oder des Verbrauchs von Energie in einem Energienetz ist zumindest in Deutschland seit der Ankündigung zur Energiewende, gemäß der bis zum Jahr 2022 der Ausstieg aus der Stromproduktion in Kernkraftwerken passieren soll, ein in der Fachwelt vieldiskutiertes Thema (so z.B. u.a. im Zusammenhang mit der Smart Grid-Technologie). Darüber hinaus gehen die Planungen schon seit Längerem dahin, dass die Energieerzeugung aus fossiler Primärenergie, wie beispielsweise Gas und Kohle, bis zum Jahr 2050 stufenweise weitgehend durch erneuerbare Energieträger, wie z.B. Wind- und Sonnenenergie, abgelöst werden soll. Für die erfolgreiche Integration der Wind- und Sonnenenergie in ein zukünftiges Energiesystem spielt die Informations- und Kommunikationstechnologie dabei eine wichtige Rolle. Weiterhin sind es staatliche Eingriffe, wie das Erneuerbare-Energien-Gesetz (EEG) bezüglich einer vorrangigen Nutzung von regenerativ erzeugtem Strom und der Handel mit Emissionszertifikaten zur Minderung von Treibhausgasemissionen, mit denen einerseits der Wettbewerb auf dem Energiemarkt verstärkt sowie andererseits der Übergang von einer zentralen zu einer dezentralen und von einer konventionellen zu einer regenerativen Energieerzeugungsstruktur eingeleitet wird. Dabei sind es die Attribute "regenerativ, dezentral und fluktuierend", die große Herausforderungen für die Energiewende darstellen. So geht gerade mit dem Wechsel zu erneuerbaren Energien, wie der Wind- und Sonnenenergie, eine Fluktuationen unterliegende Stromerzeugung einher. Das Angebot von Strom, das aufgrund des wachsenden Anteils von Offshore/Onshore-Windparks und Photovoltaik (PV)-Anlagen stark schwanken kann, muss mit einer sich ebenfalls verändernden Nachfrage in Einklang gebracht werden, z.B. durch deckungsgleiches Zusammenführen von Angebot und Nachfrage.

Darüber hinaus ist es problematisch, dass ein wesentlicher Teil des Stromangebots auf dezentraler Einspeisung zurückgeht, bei der Windpark- oder PV-Anlagen in das Verteilnetz einspeisen. Es ist diese zunehmende und verstärkt volatile, dezentrale Einspeisung elektrischer Energie, vorzugsweise innerhalb des Verteilnetzes, aber auch in übergeordneten Netzebenen, die maßgeblich dazu führt, dass es vermehrt zu Stromrückflüssen aus den unteren Netzspannungsebenen kommt. Im Unterschied dazu gab es in früheren Energienetzen, in denen die Energie nach einem Top-Down-Ansatz eingespeist wurde, einen Stromfluss, der ausschließlich von hoher zu niedriger Spannung verlief. Aufgrund eines solchen bidirektionalen Stromverkehrs ist es zwingend geboten, die Infrastruktur des Energienetzes anzupassen.

Da weiterhin weitgehend die Möglichkeiten bzw. die Bereitschaft zum Lastmanagement von Verbrauchern (*Demand Side Management*) und Erzeugern sowie die geringen Energiespeichermöglichkeiten im Netz fehlen, kann es deshalb dazu kommen, dass einerseits Engpässe, lokale Überlastungen, Verletzungen vorgegebener Spannungsbänder auftreten und andererseits sowohl eine beschleunigte Alterung von Betriebsmitteln stattfindet als auch die Notwendigkeit von Netzverstärkungen und Netzausbau besteht.

Durch die veränderte Erzeugungsstruktur und die maßgebliche Einbindung von Energieeinspeisern in untere Netzebenen bzw. Netzanschlussebenen kommt es neben der vertikalen Nutzung des Netzes zunehmend zyklisch durch eine Photovoltaik-Einspeisung (PV-Einspeisung) bei starker Sonneneinstrahlung und eine Windenergie-Einspeisung bei Starkwind zu einer horizontalen Nutzung des Energiesystems, das für eine derartige Nutzung nicht vorgesehen und ausgelegt ist.

Die Folgen für Netzbelastung, Netzbetrieb und strukturelle Entwicklung sind:
- Bestehende Netzstrukturen sind weiterhin erforderlich;
- eine erhöhte Betriebsmittelbelastung in Teilnetzen;
- ein zusätzlicher Netzausbau ist erforderlich allerdings bei relativ geringen Nutzungszeiten;
- eine unvollständige Erfassung des Netzzustands und der Auslastung der Betriebsmittel durch bestehende Messeinrichtungen in der Mittelspannungs-/Hochspannungsebene (MS/HS-Ebene) ;
- eine börsenorientierte, zentral durchgeführte Preisbildung dient maßgeblich dem Ausgleich der Regelleistung im Bilanzkreis.

Aus den vorstehend genannten Folgen für Netzbelastung, Netzbetrieb und strukturelle Entwicklung ergeben sich nunmehr folgende Problemstellungen:
- Ein Umfang notwendiger Investitionen für vorwiegend horizontale Netznutzung ist nicht pauschal zu ermitteln und von Netztopologie und -nutzung stark abhängig;
- eine börsenorientierte, zentral durchgeführte Preisbildung bildet die lokalen, ggf. hohen Netzauslastungen und den Netznutzen von Regelleistung nicht ab;
- ein börsenorientierter Einsatz lokal zur Verfügung stehender Regelleistung [z.B. durch elektrische Speicher, steuerbare Verbraucher, Power-to-X, Prosumer (*Wortschöpfung: Producer und Consumer]* kann
- das Auftreten von lokalen Überlastsituationen verschärfen,
- die Notwendigkeit eines Netzausbaus beschleunigen und
- bereits vor dem börsenorientierten Einsatz lokal zur Verfügung stehender Regelleistung die mögliche Ausnutzungsdauer oder die Restlebensdauer von Betriebsmitteln durch hohe Auslastungsgrade erheblich reduzieren.

Zur Verdeutlichung dessen ist folgendes Beispiel genannt:
«Aktive Rückspeisung lokaler Energiespeicher/von Regelleistung bei Unterfrequenz in einem "ENTSO-E"-Gebiet (European Network of Transmission System Operators for Electricity) bei gleichzeitiger hoher lokaler Einspeisung regenerativer Erzeuger». Dieses hat zur Folge:
- Erhebliche Beschleunigung der Betriebsmittelalterung durch hohe Auslastungsgrade --> Reduktion der zu erwartenden Lebensdauern;
- erhöhte Instandhaltungskosten & Handlungsbedarf im Bereich des Asset-Managements.

Mit der im Zuge der Steuerung der Versorgung, Umwandlung, Speicherung, Einspeisung, Verteilung und/oder des Verbrauchs von Energie in einem Energienetz vorstehend aufgezeigte und erläuterte Problematik wurde so umgegangen, dass die Versorgungssicherheit, die Systemzuverlässigkeit und die Stabilität maßgeblich zentral durch die in einem Verbundsystem enthaltenen (Groß-) Kraftwerke und die den lokalen Systemen übergeordneten Netzebenen bzw. Netzanschlussebenen sicher gestellt worden ist.

Aus der IEEE-Publikation von A.H. Mohsenian-Rad et al. mit dem Titel "Optimal and autonomous incentive-based energy consumption scheduling algorithm for smart grid", INNOVATIVE SMART GRID TECHNOLOGIES (ISGT), 2010 IEEE (19.01.2010), PISCATAWAY, NJ, USA, Seiten 1-6, XP031650357, ISBN: 978-1-4244-6264-3 ist es bekannt, Geräte zur Energie-Verbrauchsplanung (Energy Consumption Scheduling <ECS>), im Folgenden als ECS-Geräte bezeichnet, in intelligente Stromzähler für ein autonomes Demand-Side-Management innerhalb eines Versorgungsgebietes, wo sich mehrere Gebäude eine Energiequelle teilen, einzusetzen. Die in den intelligenten Stromzählern eingebauten ECS-Geräte sind dazu nicht nur mit einem Stromnetz, sondern auch für den Aufbau einer intelligenten Stromnetzstruktur (smart power grid) in ein lokales Kommunikationsnetz mit bidirektionaler Kommunikation in der Netzinfrastruktur eingebunden. Sie interagieren automatisch und führen dabei einen Verteilten Algorithmus zur Ermittlung eines optimalen Energieverbrauch-Zeitplans für jeden Teilnehmer mit dem Ziel aus, sowohl die Gesamtmenge der Energiekosten als auch das "Peak-to-Average-Ratio <PAR>" einer Last-Nachfrage im System zu reduzieren. Weiterhin werden Anreize für die Abonnenten/Nutzer solcher ECS-Geräte geliefert, indem der Gerätenutzung, abgeleitet aus einer spieltheoretischen Analyse, ein neuartiges Preismodell zugrunde gelegt wird. Dabei lässt sich anhand von Simulationsergebnissen bestätigen, dass mit Hilfe des Verteilten Algorithmus zur Ermittlung eines optimalen Energieverbrauch-Zeitplans das "Peak-to-Average-Ratio <PAR>" einer Last-Nachfrage und die Gesamtkosten im System signifikant reduziert werden. Auf diese Art und Weise kann in einem oder mehreren Gebäuden mit nur einer gemeinsamen Versorgung eine Lastverteilung, bei der es - allerdings ohne einen hierarchischen und nicht immer radialstrukturierten öffentlichen Netzstrukturaufbau, ohne Bedeutung oder Einbeziehung des Stromnetz als solches für das Lastmanagement und ohne Rücksicht oder Einfluss auf die Netzzustände - ausschließlich darum geht, die Lastspitzen einfach zu reduzieren.

Aus der US 2010/0217550 A1 ist ein Stromnetz-Nutzungs- und - Optimierungssystem für z.B. Wohnanwendungen, bekannt, bei dem einerseits das Stromnetz effektiv optimiert und andererseits der Strom aus allen Quellen über ein einziges physikalisches Netzwerk geliefert wird. Dabei kann die verfügbare Energie auf der Grundlage der Datenattribute des Stromnetz-Nutzungs- und -Optimierungssystems separat als endliche Ressource festgesetzt und zugewiesen werden. Das System verfügt über eine Kommunikationsschnittstelle, die Informationen von Informationsknoten, sogenannten Ino-des, empfängt. So gibt es z.B. Quellen-Inodes, Senken-Inodes sowie Übertragung- oder Verteilung-Inodes. Eine Ereignisdatenbank empfängt Ereignisse von den Inodes über die Kommunikationsschnittstelle. Ein Modellierungsserver empfängt eine Anforderung zum Festlegen einer Zuordnung von Energieverlust, Übertragungsverlust, Verteilungsverlust und Zusatzdiensten zu einem bestimmten Senken-Inode und berechnet einen virtuellen Pfad für den Stromfluss zwischen einem Quellen-Inode und dem bestimmten Senken-Inode. Auf diese Weise kann die Zuordnung von Energieverlusten, Übertragungsverlusten, Verteilungsverlusten und Zusatzdiensten zu einem bestimmten Senken-Inode festgelegt werden.

Die der Erfindung zugrundeliegende Aufgabe besteht darin, ein Verfahren, ein Computer-Programm-Produkt, eine Vorrichtung und ein "Energie-Cluster-Service"-System zum Managen von Regelzielen, insbesondere Lastausgleichen, in einem Energienetz anzugeben, bei dem bzw. bei der, wenn es durch das zunehmende, volatile, dynamische, dezentrale, lokale Einspeisen und/oder Speichern elektrischer Energie zu Belastungen in unterschiedlichen Netzanschlussebenen des Energienetzes kommt, mit dem Managen der Regelziele respektive der Lastausgleiche, die Energieversorgung so effizient und nachhaltig gesteuert wird, dass beispielsweise Lastausgleiche durch auftretende Lastschwankungen sowohl lokal gefördert als auch regional und/oder netzanschlussebenenübergreifend reduziert werden.

Diese Aufgabe wird ausgehend von dem im Oberbegriff des Patentanspruchs 1 definierten Verfahren durch die im Kennzeichen des Patentanspruches 1 angegebenen Merkmale gelöst.

Zusätzlich wird die Aufgabe ausgehend von dem im Oberbegriff des Patentanspruchs 4 definierten Computer-Programm-Produkt durch die im Kennzeichen des Patentanspruches 4 angegebenen Merkmale gelöst.

Darüber hinaus wird die Aufgabe ausgehend von der im Oberbegriff des Patentanspruchs 7 definierten Vorrichtung durch die im Kennzeichen des Patentanspruches 2 angegebenen Merkmale gelöst.

Weiterhin wird die Aufgabe ausgehend von dem im Oberbegriff des Patentanspruchs 12 definierten "Energie-Cluster-Service"-System durch die im Kennzeichen des Patentanspruches 12 angegebenen Merkmale gelöst.

Die der Erfindung zugrundeliegenden Idee besteht darin, dass hierarchische und netzorientierte Energie-Cluster innerhalb von Netzanschlussebenen eines Energienetzes gebildet werden und dabei die Lokalisierung der Energieanwendung und der lokale Energieaustausch innerhalb von Energie-Cluster, clusterübergreifend und/oder netzanschlussebenenübergreifend über eine freiwillige und anreizmotivierte Teilnahme an einem die Regelziele, insbesondere die Lastausgleichen, in dem Energienetz managenden "Energie-Cluster-Service (ECS)" erfolgt, der eine lokale, die Netzauslastung sowie die Kosten weitere Dienstleistung berücksichtigende Bewertung einzuspeisender oder zu beziehender Energien und Leistungen ermöglicht.

Durch eine spezifische Marktmodellierung (z.B. durch den Netzbetreiber) wird der Ausgleich innerhalb der Energie-Cluster gefördert und der Lastausgleich aus übergeordneten Energie-Clustern reduziert, wodurch Ausbaukosten, erhöhte Instandhaltungskosten und Kosten beschleunigten Lebensdauerverbrauchs von Betriebsmitteln verschoben bzw. vermieden werden.

Dies wird im Speziellen gemäß dem Anspruch 1 in Bezug auf ein Verfahren, gemäß dem Anspruch 4 in Bezug auf ein Computer-Programm-Produkt, gemäß dem Anspruch 7 in Bezug auf eine Vorrichtung und gemäß dem Anspruch 12 in Bezug auf ein "Energie-Cluster-Service"-System für ein Energienetz mit einer Vielzahl von Netzanschlussebenen, wobei jede dieser
**a)** zur Versorgung, Umwandlung, Speicherung, Einspeisung, Verteilung und/oder zum Verbrauch von Energie, insbesondere von regionaler, zentral gewonnener Energie und/oder von lokaler, dezentral gewonnener Energie, an ein Strommarkt mittelbar oder unmittelbar gekoppelt ist,
**b)** mindestens ein Energie-Cluster mit jeweils mindestens einem zur technischen Kommunikation in dem Energie-Cluster geeigneten Energie-Prosumer, der zumindest eines von beiden (**i**) lokale, dezentral gewonnene Energie produziert, insbesondere erzeugt und abgibt oder bezieht, speichert und wieder abgibt und (**ii**) lokale oder regionale Energie konsumiert, aufweist und dabei die Versorgung, Umwandlung, Speicherung, Einspeisung, Verteilung und/oder der Verbrauch von Energie innerhalb des Energie-Cluster, clusterübergreifend und/oder netzanschlussebenenübergreifend zwischen dem Energie-Cluster und dem Strommarkt erfolgt,
dadurch erreicht, dass
**1**) ein "Energie-Cluster-Service" zur optimierten Nutzung des Energienetzes für mindestens ein selbstorganisierendes Energie-Cluster mit jeweils den mindestens einen Energie-Prosumer, der in Bezug auf den "Energie-Cluster-Service" ein Energienetzteilnehmer und/oder ein in dem selbstorganisierenden Energie-Cluster enthaltenes, mit diesem kommunikationstechnisch verschachteltes Sub-Energie-Cluster ist, für eine cluster-individuell, Energie-Prosumer-bezogen durchzuführende, das Managen beinhaltende Evaluierung/Optimierung bereitgestellt wird, bei dem sich das Energie-Cluster in dem Energienetz netzorientiert und netzdienlich, insbesondere im Sinne einer Stabilisierung des Netzbetriebes, verhält,
**2**) ein Energie-Prosumer-bezogenes Anreiz-Angebot-Modell für den "Energie-Cluster-Service" benutzt wird, bei dem die Energie-Prosumer in dem selbstorganisierenden Energie-Cluster ohne aktive äußere Einwirkung auf Anlagen der Energie-Prosumer zur Produktion und/oder zum Konsum der Energie anreizbasiert zu einer eigenen Entscheidung geleitet werden und gemäß dieser Entscheidung freiwillig, anreizmotiviert und angebotsgesteuert an einer Teilnahme am "Energie-Cluster-Service" und einem daraus resultierenden aktiven Angebot eines zeitlichen Abrufs von Energiemengen oder Energieleistungen beteiligt werden, und
**3**) für den am "Energie-Cluster-Service" teilnehmenden Energie-Prosumer und auf dem Energie-Prosumer-bezogenen Anreiz-Angebot-Modell basierende angebots-/anreizorientierte Steuerungsdaten generiert werden, indem gemäß der Bereitstellung des "Energie-Cluster-Service" zur Durchführung der Evaluierung/Optimierung im Sinne eines gesteuerten, geregelten, zielorientierten und/oder selbstlernenden Prinzips, übermittelte Netzdaten und Netzstrukturdaten des Energienetzes, "Energie-Prosumer"-Struktur-/Profildaten von dem teilnehmenden Energie-Prosumer, Anforderungsprofildaten übergeordneter Energie-Cluster und energiespezifische Markt- und Wirtschaftsdaten, vorzugsweise dynamisch und im Wesentlichen kontinuierlich, ausgewertet werden.

Die hierfür verfolgte Vorgehensweise umfasst:
- Eine Reduktion der zu übertragenden Leistungen und Energien mit dem Ziel, dass man sich dabei auf das physikalisch Erforderliche beschränkt;
- Lokalisierung der Energieanwendung und des Leistungsausgleichs,
mit der jeweiligen Zielsetzung (z.B. als jeweiliges Fernziel) :
- Einer Teilautarkie von Netzbereichen in unterschiedlichen Netzanschlussebenen;
- der Netzbetrieb dient überwiegend der Bereitstellung notwendiger Dienstleistungen (z.B. Ausgleich der Residuallast, Stabilität, Versorgungssicherheit, etc.).

Als Lösungsansatz dient dabei ein "Energie-Cluster-Service (ECS)" mit folgenden Attributen:
- Netzstrukturorientierter Betrieb:
   Systemunterstützender Betrieb innerhalb eines Bereichs befindlicher elektrischer Energiespeicher, regelbarer Lasten, Einspeiser und Prosumer bereits auf Teilnetzebene .
- Offenes System:
   Selbstbestimmte, aktive Teilnahme an einem lokal netzdienlich orientierten Nutzungsverhalten motiviert durch lokale Markt- und Anreizmodelle.
- Clusterkonzept 1:
   Die Netzstruktur abbildende hierarchisch gegliederte Cluster von Energieanwendern können zur Lokalisierung des Energieaustausches genutzt werden.
- Clusterkonzept 2:
   Frei definierbare Cluster von im Netz beliebig verteilten Energieanwendern können eigene übergeordnete Zielstellungen erreichen (z.B. Teilnahme am Regelenergiemarkt, 1 MW Grenze).
- Leistungsbilanzierung und Leistungsmanagement:
   Anreizregulierung durch eine die Netzstruktur abbildende, d.h. lokale angebots-, nachfrage- und netznutzenbasierte Marktbildung.
- Automatisierung und Nutzungssteuerung:
   Automatisierung des lokalen Teilnehmermanagements innerhalb der Energiecluster (vgl. Agentensysteme); Eingriffsoptionen (z.B. Netzbetreiber) zur Verfolgung übergeordneter Zielstellungen (lokale Netzauslastung und - stabilität, Unterstützung der Netzfrequenz, Blindleistungsmanagement, Systemdienstleistungen, etc.).
- Erhöhung der Netzstabilität:
   Notfalls direkter und selektiver Eingriff auf die Netznutzung aktiver Teilnehmer durch den Netzbetreiber bei lokaler Überlast und Gefährdung der Netzstabilität (z.B. freiwillige ggf. vergütete Teilnahme an Abwurfszenarien).
- Abbildung der Netzebenen:
   Durch eine hierarchische Strukturierung und Betriebsweise der Energiecluster ist eine weitgehende Automatisierung über mehrere Netzebenen hinweg erreichbar (untergeordnete Cluster melden ihren Bedarf an übergeordnete und erhalten im Gegenzug notwendige Modifikationen des Teilnehmermanagements) .
- Integrierbarkeit und Erweiterbarkeit:
   Der "Energie-Cluster-Service (ECS)" ist homogen unter Beibehaltung der innerhalb der Teilnetze und im Gesamtsystem ausgelösten Vorteile in klassisch betriebene Netze integrierbar. Die Systemvorteile erhöhen sich mit der Zahl der teilnehmenden Energieanwender.

Die sich daraus bzw. hierbei ergebenden Vorteile und Optionen sind:
- Eine aktive durch Anreize geförderte Teilnahme, also einer anreizmotivierten und angebotsgesteuerten Teilnahme, am lokalen Energiemanagement und eine Zurverfügungstellung von Regelenergie und Netzdienstleistungen,
   - ohne eine zentrale Steuerung von außen (z.B. durch Eingriffe auf Fremdanlagen, Sicherheit);
   - mit einer Reduktion der Gefährdung durch Cyber-Angriffe;
   - ohne eine aufwendige Installation und Auswertung zentraler Systembeobachter mit im Netz verteilten Messstellen;
   - ohne eine erforderlich Teilnahme (freiwillige Teilnahme) am "Energie-Cluster-Service (ECS)", wobei bei einer auftretenden Kommunikationsstörung der Teilnehmer auf eigene (interne) Optimierungsziele zurückfällt (Rückfall auf teilnehmerspezifische/teilnehmerindividuelle Optimierungsziele).
- eine Markt- bzw. Vergütungsmotivierte (Anreize) freiwillige Teilnahme der Anbieter, bei der
   - eigene Optimierungsziele im "Energie-Cluster-Service (ECS)" berücksichtigt werden können;
   - z.B. eine Eigenbedarfsoptimierung der PV-Nutzung durch "Einfach Energie Speichern (EES)" erfolgt;
   - z.B. die Notwendigkeit zur Einleitung oder Fortführung von Produktionsprozessen besteht;
   - z.B. ein aktueller Ladestand, Lade- oder Entladebedarf eines Batteriesystems anhand von Kenngrößen berücksichtigt werden kann;
   - die Möglichkeit der Ableitung lokaler, regionaler und überregionaler Marktmethoden und Bewirtschaftungsverfahren besteht;
   - die Freigabe einer aus Netzsicht wünschenswerten Abschaltung durch den Teilnehmer erfolgt;
   - eine externe Not-Abschaltung durch externe Stellen/Instanzen (z.B. den Netzbetreiber) vereinbar ist.
- eine hierarchische, den Netzebenen bzw. Netzanschlussebenen folgende Zuordnung des "Energie-Cluster-Service (ECS)" mit
   - einem Angebot von "Energie-Cluster-Service (ECS)"-Leistungen entsprechend der Nutzung der Netze;
   - einer Lokalisierung der Energieanwendung und der Möglichkeit zur Reduktion des Energieaustauschs mit übergeordneten Netzanschlussebenen/Energie-Cluster;
   - einer Vermeidung/Reduktion von Überlastsituationen;
   - einer optimierten Nutzung von verfügbaren regenerativen Energien in bestehende Netzstrukturen;
   - einer Integration oder Teilintegration des "Energie-Cluster-Service (ECS)" ausgehend von Energie-Microcluster bis in höhere Netzanschlussebenen, in den ein regulärer Netzbetrieb möglich ist;
   - einer Verlustminimierung im Netz.
- eine Optimierung der Netznutzung zur Vermeidung von Netzverstärkung und Netzausbau
   - auf Grundlage des NOVA-Prinzips (Netzoptimierung vor Verstärkung vor Ausbau);
   - durch Ableitung netzorientierter, lokaler, technisch und wirtschaftlich sinnvoller Marktmodelle;
   - mit durch Informationen bis auf die Betriebsmittelebene zur Verfügung stehende Echtzeitdaten zur Analyse des Zustands von Netzen und Subnetzen;
   - mit einer langfristigen Nutzbarkeit der Informationen zur zustandsorientierten Instandhaltung und zur Ausrichtung der Asset-Management Strategie;
   - mit einer Finanzierung der Anreize durch Erschließung von Kostenpotentialen im Betrieb und beim Asset Management.

Veranschaulichung des "Energie-Cluster-Service (ECS)"-Lösungsansatzes im Lichte der sich ergebenden Vorteile und Optionen anhand eines Anwendungsszenarios in einem "Energie-Microcluster auf Niederspannungsebene":
Familie A möchte eine Trommel mit Wäsche trocknen. Der Trockner (Teilnehmer 1) meldet im Microcluster (virtuell Niederspannungsabgang am ON-Trafo) einen Bedarf von 3 kWh Energie bei einer Leistung von ca. 1,5 kW an, die ab sofort innerhalb eines Zeitfensters von 6h zur Verfügung gestellt werden sollen.

Der Energiespeicher der Familie B (Teilnehmer 2) ermittelt anhand von Prognosedaten der hauseigenen Photovoltaik-Anlage, dass er diese Leistung unter Berücksichtigung der Angebotslage innerhalb des Clusters und der übergeordneten Vorgaben des Netzbetreibers die geforderte Leistung und Energie lokal innerhalb der NS-Versorgung zur Verfügung stellen wird.

### Folge:

Aus dem Leistungsaustausch resultiert keine zusätzliche Belastung für das übergeordnete Netz, weniger Gesamtverluste und keine Notwendigkeit zum Netzausbau. Gegenüber einer börsenorientierten Betriebsweise reduzieren sich die Auslastung und der Betriebsmittelverbrauch respektive die Alterung der Systemkomponenten.

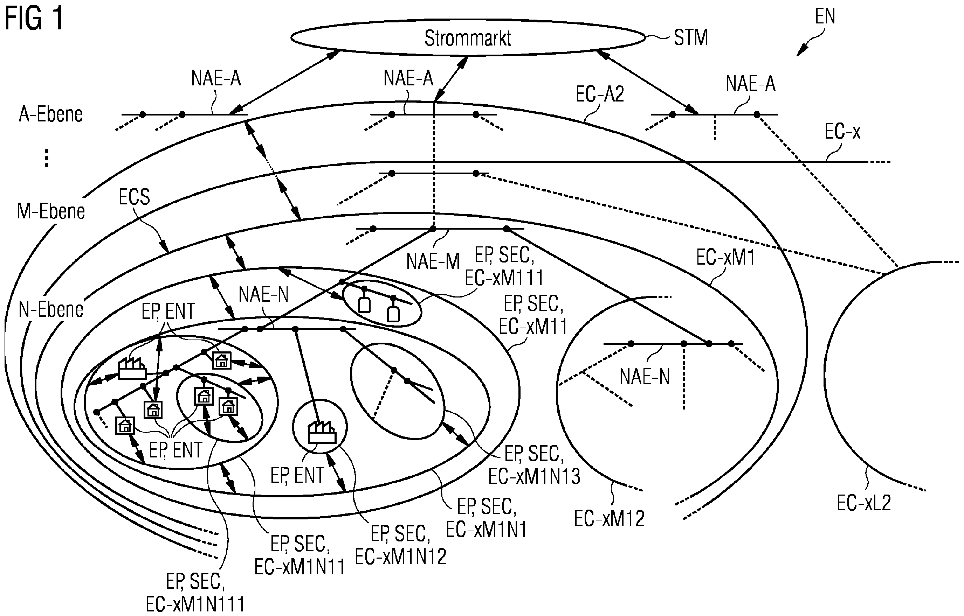

Zusätzliche erfindungsgemäße Vorteile ergeben sich jeweils aus den in den zu den Ansprüchen 1, 4, 7 und 12 gehörenden Unteransprüchen angegebenen Weiterbildungen der Erfindung. Weitere Vorteile der Erfindung ergeben sich aus der nachfolgenden Beschreibung eines Ausführungsbeispiels der Erfindung anhand der FIGUREN 1 bis 4. Diese zeigen:
FIGUR 1 ein Prinzipschaubild von einem hierarchisch strukturierten Energienetz zur Realisierung eines "Energie-Cluster-Service (ECS)";
FIGUR 2 ein Baumdiagramm bezüglich Energie-Cluster für die Realisierung des "Energie-Cluster-Service (ECS)" gemäß der FIGUR 1;
FIGUR 3 ein Struktur- und Ablaufdiagramm für die Umsetzung des "Energie-Cluster-Services (ECS)";
FIGUR 4 den Aufbau eines Systems zur Realisierung des "Energie-Cluster-Service (ECS)".

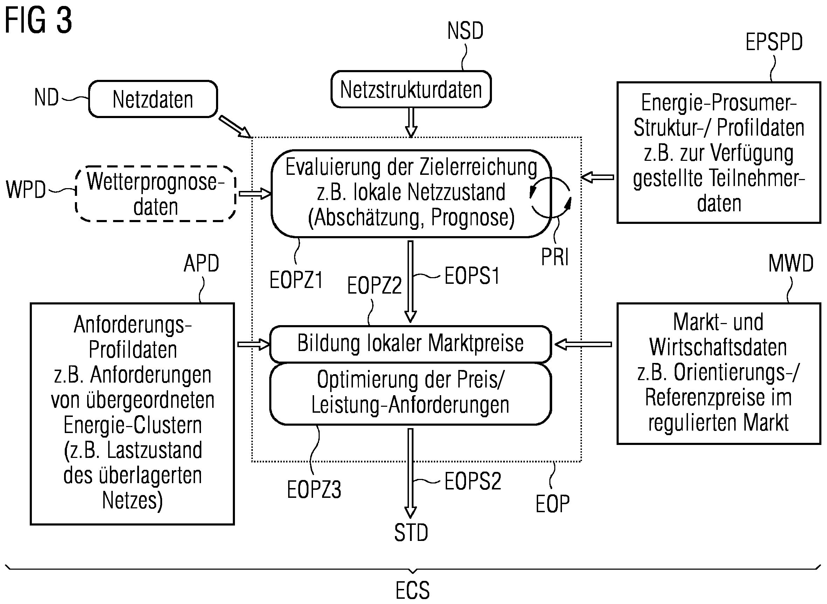

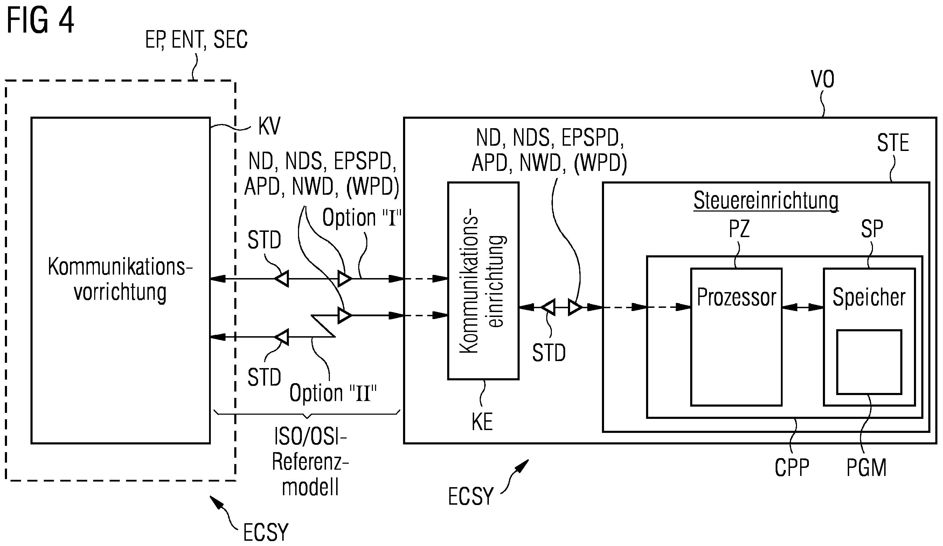

FIGUR 1 zeigt ein Prinzipschaubild von einem hierarchisch strukturierten Energienetz EN zur Realisierung eines "Energie-Cluster-Service" ECS. Mit diesem "Energie-Cluster-Service" ECS sollen bei der Steuerung der Versorgung, Umwandlung, Speicherung, Einspeisung, Verteilung und/oder des Verbrauchs von Energie in dem Energienetz EN Regelziele, wie z.B. und vorzugsweise Lastausgleiche, in dem Energienetz EN gemanagt werden. Das Managen beinhaltet im Wesentlichen ein Evaluieren/Optimieren mittels eines zu diesem Zweck spezifisch konzipierten und ausgestalteten Evaluierungs-/Optimierungsprozesses. Wie dieser Prozess im Detail aussieht, funktioniert und implementiert ist wird später im Zusammenhang mit der Beschreibung der FIGUREN 3 und 4 erläutert.

Das in der FIGUR 1 dargestellt Energienetz EN eine Vielzahl von Netzanschlussebenen NAE-A, ...NAE-M, NAE-N, die jeweils zur Versorgung, Umwandlung, Speicherung, Einspeisung, Verteilung und/oder zum Verbrauch von Energie an ein Strommarkt STM entweder mittelbar oder unmittelbar gekoppelt sind. Die definitionsgemäß auf Ebenen von A bis N in einer Energienetzdarstellung positionierten Netzanschlussebenen NAE-A, ...NAE-M, NAE-N werden häufig auch als Netzebenen bezeichnet. In den Netzanschlussebenen NAE-A, ...NAE-M, NAE-N ist jeweils mindestens ein Energie-Cluster enthalten. So ist gemäß der Darstellung in der FIGUR 1 auf der A-Ebene, definitionsgemäß als erste Ebene nach dem Strommarkt STM, ein Energie-Cluster EC-A2, das unmittelbar mit dem Strommarkt STM verbunden ist. Aus der Sicht des Strommarktes STM unterhalb der A-Ebene ist auf einer x-beliebigen Ebene ein x-beliebiges Energie-Cluster ECx enthalten, das mittelbar u.a. über das Energie-Cluster EC-A2 mit dem Strommarkt STM verbunden ist und in dem zwei untergeordnete Energie-Cluster enthalten sind, und zwar auf der L-Ebene ein Energie-Cluster EC-xL2 und auf der M-Ebene ein Energie-Cluster EC-xM1. Letzteres ist in Bezug auf den zu realisierenden "Energie-Cluster-Service" ECS ein selbstorganisierendes Energie-Cluster EC-xM1 mit jeweils mindestens einem zur technischen Kommunikation in dem Energie-Cluster EC-xM1 geeigneten Energie-Prosumer EP. Dieser produziert lokale, dezentral gewonnene Energie, wobei das Produzieren vorzugsweise durch Erzeugen und Abgeben oder aber durch Beziehen (z.B. durch käuflicher Erwerb), Speichern und "Wieder Abgeben" passieren kann bzw. erfolgt und/oder der Energie-Prosumer EP konsumiert lokale oder regionale Energie, die in dem Energienetz EN zur Verfügung gestellt wird.

Die Versorgung, Umwandlung, Speicherung, Einspeisung, Verteilung und/oder der Verbrauch der Energie in dem Energienetz EN erfolgt grundsätzlich innerhalb des jeweiligen Energie-Cluster EC-A2, EC-x, EC-xM1, EC-xL2, clusterübergreifend und/oder netzanschlussebenenübergreifend zwischen dem Energie-Cluster EC-A2, EC-x, EC-xM1, EC-xL2 und dem Strommarkt STM.

Den bzw. die Energie-Prosumer EP gibt es jedoch nicht nur in dem selbstorganisierenden Energie-Cluster EC-xM1, sondern auch in den anderen Energie-Clustern EC-A2, EC-x, EC-xL2, wenngleich dies in der FIGUR 1 nicht explizit dargestellt ist. Das Gleiche gilt auch für den zu realisierenden "Energie-Cluster-Service" ECS auf der Basis eines selbstorganisierenden Energie-Clusters. So ist es ohne jegliche Einschränkung auch möglich, wenngleich die Darstellung in der FIGUR 1 sich diesbezüglich ausschließlich auf das selbstorganisierende Energie-Cluster EC-xM1 beschränkt, dass auch die anderen Energie-Clustern EC-A2, EC-x, EC-xL2 hierfür in Frage kommen.

Der mindestens eine Energie-Prosumer EP des selbstorganisierende Energie-Clusters EC-xM1 ist ein Energienetzteilnehmer ENT und/oder ein in dem selbstorganisierenden Energie-Cluster EC-xM1 enthaltenes, mit diesem kommunikationstechnisch verschachteltes Sub-Energie-Cluster SEC. Verschachtelt bedeutet in diesem Zusammenhang, dass der Sub-Cluster SEC streng hierarchisch auf gleicher oder unterschiedlicher Ebene zum Energie-Cluster EC-xM1 angeordnet ist. So sind gemäß der Darstellung in der FIGUR 1 auf der M-Ebene, also der gleichen Ebene wie das selbstorganisierende Energie-Cluster EC-xM1, ein hierarchisch untergeordnetes Sub-Energie-Cluster EC-xM11, ein hierarchisch untergeordnetes Sub-Energie-Cluster EC-xM12 und ein hierarchisch untergeordnetes Sub-Energie-Cluster EC-xM111 sowie auf der N-Ebene unterhalb der M-Ebene (aus der Sicht des Strommarktes STM) ein hierarchisch untergeordnetes Sub-Energie-Cluster EC-xM1N1, ein hierarchisch untergeordnetes Sub-Energie-Cluster EC-xM1N11, ein hierarchisch untergeordnetes Sub-Energie-Cluster EC-xM1N12, ein hierarchisch untergeordnetes Sub-Energie-Cluster EC-xM1N13 und ein hierarchisch untergeordnetes Sub-Energie-Cluster EC-xM1N111 angeordnet. Mit Ausnahme des hierarchisch untergeordneten Sub-Energie-Clusters EC-xM12 auf der M-Ebene sind sämtliche hierarchisch untergeordnetes Sub-Energie-Cluster für den zu realisierenden "Energie-Cluster-Service" ECS und der diesbezüglichen Darstellung in der FIGUR 1 maßgebend. Dies bedeutet aber wiederum (wie schon im Zusammenhang mit den anderen Energie-Clustern EC-A2, EC-x, EC-xL2 erwähnt) nicht, dass hierarchisch untergeordnete Sub-Energie-Clusters EC-xM12 für den "Energie-Cluster-Service" ECS ungeeignet ist. Ganz im Gegenteil (es ist nur in der FIGUR 1 nicht explizit dargestellt).

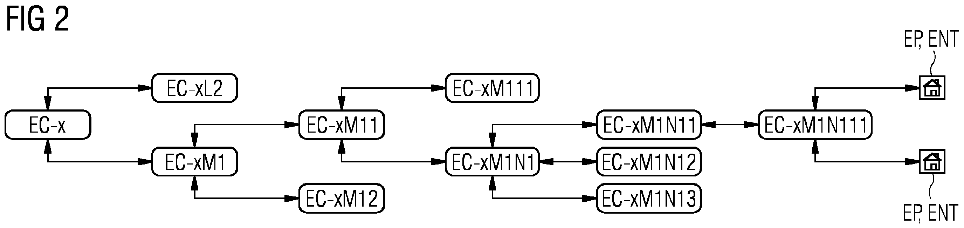

Wie die einzelnen Sub-Energie-Cluster EC-xM11, EC-xM12, EC-xM111, EC-xM1N1, EC-xM1N11, EC-xM1N12, EC-xM1N13, EC-xM1N111 nun in Bezug auf das selbstorganisierende Energie-Cluster EC-xM1 und die anderen Energie-Clustern EC-x, EC-xL2 verschachtelt sind, wird anhand FIGUR 2 in Gestalt eines Baumdiagramms gezeigt.

Im Folgenden wird jetzt die Funktionsweise "Energie-Cluster-Service" ECS anhand der FIGUR 1 skizziert:
- Der Informationsaustausch zwischen den am "Energie-Cluster-Service" ECS teilnehmenden Energie-Prosumern EP, ENT, SEC, EC-xM11, EC-xM111, EC-xM1N1, EC-xM1N11, EC-xM1N12, EC-xM1N13, EC-xM1N111 (in der nachfolgenden Skizzierung als "Teilnehmer" bezeichnet) wird durch Doppelpfeile dargestellt.
- Die Teilnehmer innerhalb der betreffenden Energie-Cluster SEC, EC-xM11, EC-xM111, EC-xM1N1, EC-xM1N11, EC-xM1N12, EC-xM1N13, EC-xM1N111 (Sub-Energie-Cluster in einem selbstorganisierender Energie-Cluster) werden in Form einer kreis- und ellipsenförmigen Fläche dargestellt.
- Jeder Teilnehmer und Energie-Cluster verfügt über eine Kommunikationseinheit, wie sie in FIGUR 4 gezeigt ist und deren Funktionsweise dann im Zusammenhang mit der Beschreibung von FIGUR 4 erläutert wird. In einer bevorzugten Ausführungsform ermöglicht die jeweilige Kommunikationseinheit sowohl "Energie-Prosumer"-seitig als auch "Energie-Cluster"-seitig ein Internetzugang bzw. weist eine Internetanschluss auf, der aufgrund der verwendeten Kommunikationsarten und -verfahren (wie später im Zusammenhang mit der Beschreibung von FIGUR erläutert) auch ein bestehender, privater Internetanschluss sein kann. Der Teilnehmer verfügt nicht zwingend über eine separate, dedizierte Messstelle bzw. Messeinheit, weist jedoch eine eigene eindeutige Signatur auf, die diesen hinsichtlich der Teilnahme am "Energie-Cluster-Service" ECS eindeutig kennzeichnet. Diese Kennzeichnung kann mit einer IP-Adresse vergleichen werden.

- Jeder Teilnehmer meldet sich einmalig für die Teilnahme am "Energie-Cluster-Service" ECS mit seinen spezifischen Abnehmer-, Verbrauchs-, Erzeugungs- und Speicherdaten, Kapazitäten und weiteren Teilnehmerinformationen (z.B. Adresse und ggf. grundlegenden Kennlinien, etc.) an, die unter "Energie-Prosumer"-Strukturdaten subsummiert werden (vgl. FIGUR 3). Hierbei ist es jedem Teilnehmer freigestellt, ob dieser lediglich seine wesentlichen "Energie-Prosumer"-Komponenten berücksichtigt, die aufgrund ihrer technischen Eigenschaften bereits mess- und steuerungstechnisch ausgerüstet sind (z.B. PV-Anlagen, Speichersysteme, Komponenten der Home-Automation, steuerbare industrielle Komponenten und Anlagen, etc.) oder ob dieser eine den Anschluss erfassende messtechnische Lösung nutzt (z.B. auf der Basis von Smart-Meter oder Energy-Gateways, etc.).
- Wird lediglich ein Teil der Anlagentechnik erfasst (z.B. Berücksichtigung nur der PV-Anlage und des Speichersystems bei einem Privathaushalts), so kann durch eine weitergehende Zuordnung zu typisierten Verbraucher- bzw. "Energie-Prosumer"-Profildaten (vgl. FIGUR 3) eine weitere Verbesserung der Abschätzung des (mittleren aktuellen) Last- bzw. Einspeiseverhaltens erreicht werden, ohne dass hierfür eine aufwendige und kostenintensive zentrale Abfrage des Teilnehmerverhaltens mittels eines Smart-Meters (durch den Teilnehmer selbst oder eine zentrale Erfassung) erforderlich ist.
- Jeder selbstorganisierende Energie-Cluster EC-xM1 beinhaltet zumindest einen Energienetzteilnehmer ENT und/oder Sub-Energie-Cluster SEC, EC-xM11, EC-xM111, EC-xM1N1, EC-xM1N11, EC-xM1N12, EC-xM1N13, EC-xM1N111. Energie-Cluster EC-xM1, SEC, EC-xM11, EC-xM111, EC-xM1N1, EC-xM1N11, EC-xM1N12, EC-xM1N13, EC-xM1N111 können unter Berücksichtigung der Netzstruktur beliebig aufgebaut werden und somit bei geeigneter Zuordnung (z.B. durch den Netzbetreiber) gezielt netzdienlich sein.
- Die Verfolgung von Regelzielen innerhalb der Energie-Cluster vollzieht sich hierbei durch ein Anreiz-Angebot-Modell, d.h. innerhalb lokaler und hierarchisch ineinandergreifender Marktsysteme. Vorteilhaft ist hierbei, dass beim "Energie-Cluster-Service" ECS nicht von außen aktiv auf Kundenanlagen eingewirkt wird, sondern dass diese lediglich anreizbasiert zu einer eigenen Entscheidung geleitet werden (z.B. Ausspeichern von Energie aus einem Batteriespeichersystem bei Wirkleistungsmangel im lokalen Subnetz). Somit entfallen die im Normalbetrieb technisch und v.a. rechtlich kritischen direkten Eingriffe des Netzbetreibers auf Kundenanlagen (inkl. haftungsrechtlicher Konsequenzen).
- Wegen der freiwilligen anreizmotivierten (z.B. kosten- bzw. vergütungsgetriebenen) Beteiligung der Teilnehmer am "Energie-Cluster-Service" ECS und dem resultierenden aktiven Angebot von Energiemengen bzw. Leistungen und deren zeitlichem Abruf (anreizmotivierten und angebotsgesteuerten Teilnahme), kann bei der Teilnehmerkommunikation prinzipiell auf bestehende Internetverbindungen der Teilnehmer zurückgegriffen werden. Jeder Teilnehmer kann hierbei selbst festlegen, welche Informationen er zu welcher Zeit innerhalb des "Energie-Cluster-Services" ECS zur Verfügung stellt. Bei Bedarf ist in Anlehnung an Online-Banking-Verfahren eine schlüsselbasierte Sicherung der Kommunikation möglich, um einen systemrelevanten Eingriff durch Dritte auszuschließen.
- Da sämtliche Daten durch die Teilnehmer selbst den Serversystemen des "Energie-Cluster-Services" ECS angeboten bzw. geliefert werden, ist wiederum kein gesellschaftlich und u.U. rechtlich kritischer Zugriff auf Kundendaten von außen (z.B. durch den Netzbetreiber) erforderlich.

- Die Erfassung der Belastungs- und Lastsituation eines Teilnetzes kann bereits durch einzelne in diesem Teilnetz befindliche Teilnehmer verbessert werden, da zusätzliche Informationen zum (quasi-) aktuellen Belastungsverhalten zur Verfügung gestellt werden. Durch die Nutzung des Anreiz-Angebot-Modells kann in gleicher Weise auch bereits bei wenigen Teilnehmern Überlastsituationen entgegengewirkt werden (z.B. Batterielade- und Entlademanagement, PV-Leistungsreduzierung, Steuerung industrieller Analgen, etc.).
- Die Energie-Cluster können neben primären Regelzielen (z.B. Stabilisierung lokaler Netze) auch zur Unterstützung anderes gearteter Regelziele dienlich sein (z.B. erreichen relevanten Leistungsgrenzen für Teilnahme am Strommarkt, etc.). Hierfür können auch im Netz verteilte Teilnehmer, Cluster oder Teilcluster anmelde-, steuerungs- und/oder datentechnisch gekoppelt werden. Die eigentliche Steuerung der Teilnehmer überlagert dann die ggf. mehreren Anreize in einer Weise, die überlagerte Optimierungsziele in bester Weise erreichbar macht.
   Die Optimierungsziele innerhalb des gesamten Energienetzes EN oder Teilen davon werden durch den Betrieb des hierarchisch strukturierten "Energie-Cluster-Services" ECS dadurch, dass die Netzebenen ebenso einer hierarchischen Abbildung/Integration folgen, durch Anwendung lokaler Regelziele innerhalb der Energie-Cluster erreicht.
   Mögliche Optimierungs- und Regelziele sind:
      - Ausgleich/Reduktion der von übergeordneten Netzebenen benötigten Leistungen;
      - Reduktion des Lastflusses in übergeordnete Netzebenen;
      - Lokalisierung der Energieanwendung;
      - Reduktion der Verluste in Betriebsmitteln und Teilen der Netzebenen;
      - Verlängerung der Lebensdauer und Wirtschaftlichkeit von Betriebsmitteln;
      - Reduktion von Instandhaltungs- und Erneuerungskosten;
      - Optimierung der Integration regenerativer/volatiler Einspeiser und Lasten;
      - Vermeidung oder zeitliche Verschiebung von Netzausbau, -verstärkungen und Netzerweiterungen;
      - Optimierung der zur Verfügung stehenden Netzdienstleistungen (z.B. Spannungshaltung, Frequenzhaltung, Netzwiederaufbau, Kurzschlussleistung, etc.)
      - Stabilisierung des Netzbetriebs;
      - Erhöhung des Autarkiegrades der Versorgung.
- Weiterhin können (optional) auch Wetterprognosedaten vorzugsweise für eine (kurzfristige) Beeinflussung des Teilnehmerverhaltens eingebunden werden (vgl. FIGUR 3).
- Für die Berechnung der Netzzuständen wird auf vorzugsweise auch bereits bestehende Messsysteme und Informationen sowie die von der Teilnehmern zur Verfügung gestellte Informationen zugegriffen (aktueller Leistungsaustauch und mögliche Lastverschiebungen und Speicheroptionen). Mit zunehmender Teilnehmerzahl werden sich die Zustandsermittlung und die Prognose beim "Energie-Cluster-Service" ECS signifikant verbessern.
- Die Berechnungssysteme zur notwendigen Informationenbearbeitung können hierbei dezentral und prinzipiell unabhängig von der Netzstruktur oder aber lokal z.B. in Trafo-Stationen oder Umspannwerken untergebracht werden. In gleicher Weise sind aber auch überregional (z.B. beim Netzbetreiber) stationierte Serverfarmen möglich. Jedes (redundante) Serversystem kann hierbei die Information und die Steuerung mehrerer (zahlreicher) Cluster übernehmen.
- Die Sicherheit des "Energie-Cluster-Services" ECS kann durch redundante Serversysteme wesentlich erhöht werden.
- Bei einem Ausfall des "Energie-Cluster-Services" ECS fallen die Teilnehmer entweder in das "normale", d.h. nicht-angebotsorientierte, passive Verhalten zurück oder aber warten entsprechend vorgegebener Regeln auf einen Wiederaufbau des ECS-Systems. Sollte dieses nicht zur Verfügung stehen, fällt das Lastverhalten innerhalb des Netzes lediglich auf das eines nicht-servicegeführten Netzes zurück. Durch lokale Regeln und die Logik der Teilnehmer sind hierbei allerding sozusagen passive Optimierungen möglich, die z.B. auch eine Netzentlastung in Spitzenzeiten ermöglichen können.
- Die Teilnehmer bzw. Energie-Cluster können u.a. auch direkt am Strommarkt teilnehmen. Die Teilnahmebedingungen sind durch zugehörige Energie-Cluster unter Berücksichtigung des lokalen Netzzustands aktuell zu bestimmen, um aus höhen Netzauslastungen resultierenden Nachteilen zu vermeiden.
- Die Teilnehmer (Endverbraucher) informieren die eigenen Clusterservices, z.B. im Sub-Energie-Cluster EC-xM1N111, über die zur Verfügung stehende positive bzw. negative Leistung, Energie und den Zeitraum in dem diese Leistung zur Verfügung gestellt werden kann.
- Der Clusterservice im Sub-Energie-Cluster EC-xM1N111 evaluiert den Zustand des von ihm umfassten Netzbereichs anhand der aktuell übermittelten Leistungsdaten der diesem zugehörigen Teilnehmer. Die Leistungsdaten sind hierbei auch im Falle einer unvollständigen Leistungserfassung (z.B. Leistung PV-Anlage, Leistung Speicher und lediglich angenommene Leistung eines Standardhaushalts) nutzbringend, da auf diese Weise wesentlich mehr Informationen zur Verfügung stehen als in heutigen Netzen. Vorteilhaft ist weiterhin, dass die Daten ohne weitere kostenintensive Kommunikationsstrukturen freiwillig und anreizmotiviert durch die Teilnehmer erbracht werden.
- Unter Berücksichtigung der Anforderungen des übergeordneten Sub-Energie-Clusters EC-xM1N11 - bzw. rekursiv der hierarchisch übergeordneten Energie-Cluster - leitet der Clusterservice im Sub-Energie-Cluster EC-xM1N111 Angebote in Form technischer Freigaben und/oder in Form monetärer Anreize, z.B. bezogen auf einen aktuellen oder einen mittleren Leistungsgrundpreis, ab. Die im Sub-Energie-Cluster EC-xM1N11 beteiligten Teilnehmer fragen entweder in regulären Zeitintervallen oder aber in Abhängigkeit ihrer Leistungs- und Speicherzustände die angebotenen Freigaben bzw. monetären Anreize beim Clusterservice aktiv ab und leiten ihrerseits geeignete Maßnahmen in Abhängigkeit von ihren technischen Zuständen (z.B. Speicherstand, etc.) ab, melden diese an den übergeordneten Clusterservice und führen diese durch.
- Die optimalen bzw. nicht optimalen Zeitintervalle zur Abfrage der Angebote bzw. Freigaben des übergeordneten Clusterservice bzw. zur Ermittlung der eigenen Angebote leiten sich aus technischen Gegebenheiten (Zustand des Teilnehmers bzw. des Sub-Energie-Clusters EC-xM1N11, Auslastung, Speicherstände, etc.) ab.
- Anreize können neben reinen technischen Freigaben (z.B. Zulässigkeit von Schalthandlungen) monetäre Auf- bzw. Abschläge auf aktuelle börsenbasierte Leistungspreise oder auch die Netzstruktur bereits berücksichtigende und technisch abgeleitete korrigierte Leistungspreise sein.
- Bei dem hierarchisch strukturierten "Energie-Cluster-Service" ECS ergeben sich auf diese Weise von oben nach unten über die Netzebenen hinweg den aktuellen Auslastungszustand und das Angebot berücksichtigende Preisstrukturen. Die Netzstruktur und die steigenden Dienstleitungsanforderungen in unterlagerten Netzebenen führen hierbei zu einer "natürlichen" und technisch angemessenen Verteuerung eines Energieaustauschs in unteren Netzebenen (bei der Annahme einer "gleichmäßigen" Auslastungsstruktur). Bei lokalen Überlastsituationen kommt es ebenfalls bereits lokal zu einer Verschiebung des Leistungshaushalts, die anreizgetrieben der erhöhten (lokalen) Auslastung durch eine geeignete Aktivierung der Teilnehmer entgegenwirkt.
- Hierarchisch informieren untergeordnete Energie-Cluster, z.B. der Sub-Energie-Cluster EC-xM1N111, übergeordnete Energie-Cluster, z.B. den Sub-Energie-Cluster EC-xM1N11, über zur Verfügung stehende positive bzw. negative Leistung, Energien und den Zeitraum in dem diese Leistungen zur Verfügung stehen. In dieser Weise werden die zum Ausgleich zur Verfügung stehenden Leistungen und Energien schrittweise global zur Verfügung gestellt.
- Dieses wiederholt sich im Zuge der Realisierung des "Energie-Cluster-Services" ECS über alle beteiligten, hierarchisch verschachtelten Energie-Cluster hinweg. So von dem Sub-Energie-Cluster EC-xM1N11 zum Sub-Energie-Cluster EC-xM1N1, danach vom Sub-Energie-Cluster EC-xM1N1 zum Sub-Energie-Cluster EC-xM11 und schließlich vom Sub-Energie-Cluster EC-xM11 zum Energie-Cluster EC-xM1. Die im gesamten Verbundsystem benötigte Regelleistung kann auf diese Weise anreizmotiviert in bezüglich der lokalen Netzbelastung geeigneten Clustern, d.h. verteilt im Netzt und u.a. auch netzdienlich zur Verfügung gestellt werden.
- Der "Energie-Cluster-Service" ECS ermöglicht auf diese Weise eine optimierte Nutzung des Energienetzes EN und eine Reduktion der Maximallasten bzw. Einspeisungen. Durch den lokalen Leistungsausgleich reduziert sich der Umfang der zu übertragenden Energien.
- Die Integration übergeordneter oder lokaler Last- und Wetterprognosedaten bzw. deren Profile ermöglicht eine Erweiterung des Systems in Form von entsprechend angepassten Angeboten und Anreizen. Zusätzlich können diese Daten über den "Energie-Cluster-Service" ECS den Teilnehmern zur Verfügung gestellt werden, um die Entscheidungskriterien zur Teilnahme unter Berücksichtigung eigner Vorgaben bzw. technischer Zustände weiter zu optimieren.
- Der "Energie-Cluster-Service" ECS eröffnet weitreichende Automatisierungsoptionen zur Lokalisierung der Energieanwendungen, zur Vergleichsmäßigung der Lastflüsse und so zur Reduzierung notwendiger Netzverstärkungen bzw. Ausbaumaßnahmen.

FIGUR 3 zeigt ein Struktur- und Ablaufdiagramm für die Umsetzung des "Energie-Cluster-Services" ECS. Die zentrale Instanz für diese Umsetzung ist ein in dem Energie-Cluster EC-xM1 und/oder dem Sub-Energie-Cluster SEC, EC-xM11, EC-xM111, EC-xM1N1, EC-xM1N11, EC-xM1N12, EC-xM1N13, EC-xM1N111 gehosteter Evaluierungs-/Optimierungsprozess EOP, mit dem basierend auf einem Energie-Prosumer-bezogenen Anreiz-Angebot-Modell für an dem "Energie-Cluster-Services" ECS teilnehmende Energie-Prosumer EP, ENT, SEC, EC-xM11, EC-xM111, EC-xM1N1, EC-xM1N11, EC-xM1N12, EC-xM1N13, EC-xM1N111 in dem selbstorganisierenden Energie-Cluster EC-xM1 eine cluster-individuelle Energie-Prosumer-bezogene, netzorientierte und netzdienliche, z.B. im Sinne einer Stabilisierung des Betriebes im Energienetz EN gemäß der FIGUR 1, Evaluierung/Optimierung durchgeführt wird. Bei diesem Evaluierungs-/Optimierungsprozess EOP werden zu diesem Zweck drei Evaluierungs-/Optimierungsprozesszustände, ein erster Evaluierungs-/Optimierungsprozesszustand EOPZ1, ein zweiter Evaluierungs-/Optimierungsprozesszustand EOPZ2 und ein dritter Evaluierungs-/Optimierungsprozesszustand EOPZ3, in der genannten Reihenfolge durchlaufen.

In dem ersten Evaluierungs-/Optimierungsprozesszustand EOPZ1 des Evaluierungs-/Optimierungsprozesses EOP wird durch das Auswerten von Netzdaten ND und Netzstrukturdaten NSD des Energienetzes EN, sowie "Energie-Prosumer"-Struktur-/Profildaten EPSPD von dem teilnehmenden Energie-Prosumer EP, ENT, SEC, EC-xM11, EC-xM111, EC-xM1N1, EC-xM1N11, EC-xM1N12, EC-xM1N13, EC-xM1N111 in dem Energie-Cluster EC-xM1, die z.B. zur Verfügung gestellte Teilnehmerdaten beinhalten, eine Evaluierung der Zielerreichung, z.B. des lokalen Netzzustandes in Form von Abschätzung und Prognose, vorzugsweise dynamisch mit sich verändernden Daten und im Wesentlichen kontinuierlich, im Sinne eines gesteuerten, geregelten, zielorientierten und/oder selbstlernenden Prinzips PRI durchgeführt.

Unter einem selbstlernenden Prinzip wird ein Regelungsverfahren verstanden, bei dem spezifische Eingangsgrößen und unter Berücksichtigung neuronalen Netze, Fuzzy-Logik sowie weiteren Methoden verwendet werden.

Eine sich auf dieses Prinzip stützende Evaluierung-/Optimierung basiert auf den lokalen innerhalb des Energie-Cluster gegebenen Entscheidungskriterien zum technisch und/oder wirtschaftlich optimierten bzw. verbesserten Betrieb der Netze und Betriebsmittel innerhalb des Energie-Cluster, der durch die hierarchische Integration und Abstufung des Energie-Clusters innerhalb des hierarchisch verschachtelten Systems von Energie-Clustern und der sich hierdurch für die Netzstruktur ergebenden Optimierungen und Verbesserungen.

Neben lokalen zu Verfügung gestellten Messgrößen und den sich aus der Realisierung/Umsetzung des "Energie-Cluster-Services" ECS ergebenden Informationen sowie der übergeordneten Leistungs-, Lastfluss- und Kostendaten können hierzu aus Lastflussberechnungen und -analysen sowie Netzzustandsabschätzungen (State Estimation) stammende Daten eingesetzt werden.

Optional können in dem ersten Evaluierungs-/Optimierungsprozesszustand EOPZ1 des Evaluierungs-/Optimierungsprozesses EOP noch Wetterprognosedaten WPD für die erläuterte Evaluierung berücksichtigt werden.

Als Evaluierungsergebnis erhält man eine Abbildung von notwendigen Maßnahmen, z.B. netzdienliche Anforderungen an den teilnehmenden Energie-Prosumer EP, ENT, SEC, EC-xM11, EC-xM111, EC-xM1N1, EC-xM1N11, EC-xM1N12, EC-xM1N13, EC-xM1N111.

Dieses Evaluierungsergebnis wird in einem ersten Evaluierungs-/Optimierungsprozessschritt EOPS1 des Evaluierungs-/Optimierungsprozesses EOP weiterverarbeitet.

Dazu wird in dem zweiten Evaluierungs-/Optimierungsprozesszustand EOPZ2 des Evaluierungs-/Optimierungsprozesses EOP zur Bildung lokaler Marktpreise das Evaluierungsergebnis zusammen mit den Netzdaten ND und den Netzstrukturdaten NSD des Energienetzes EN, den "Energie-Prosumer"-Struktur-/Profildaten EPSPD des teilnehmenden Energie-Prosumers EP, ENT, SEC, EC-xM11, EC-xM111, EC-xM1N1, EC-xM1N11, EC-xM1N12, EC-xM1N13, EC-xM1N111 in dem Energie-Cluster EC-xM1, Markt und Wirtschaftsdaten MWD, die z.B. Orientierungs-/Referenzpreise im regulären Markt beinhalten, sowie Anforderungsprofildaten APD, die z.B. Anforderungen von übergeordneten Energie-Cluster beispielsweise in der Form des Lastzustandes des überlagerten Netzes beinhalten, ausgewertet.

In dem sich daran anschließenden dritten Evaluierungs-/Optimierungsprozesszustand EOPZ3 des Evaluierungs-/Optimierungsprozesses EOP wird mit den zuvor gebildeten lokalen Marktpreisen eine Optimierung der Preis/LeistungsAnforderungen vorgenommen.

Als Optimierungsergebnis erhält angebots-/anreizorientierten Steuerungsdaten STD, die in einem zweiten Evaluierungs-/Optimierungsprozessschritt EOPS2 des Evaluierungs-/Optimierungsprozesses EOP zur weiteren Verwendung vorliegen.

FIGUR 4 den Aufbau eines Systems zur Realisierung des "Energie-Cluster-Service" ECS, das als "Energie-Cluster-Service"-System ECSY bezeichnet wird. Das "Energie-Cluster-Service"-System ECSY enthält eine Vorrichtung VO zum Managen der Regelziele bzw. der Lastausgleiche, bei der Steuerung der Versorgung, Umwandlung, Speicherung, Einspeisung, Verteilung und/oder des Verbrauchs von Energie in dem Energienetz EN gemäß der FIGUR 1 und eine Kommunikationsvorrichtung KV. Die Vorrichtung VO und die Kommunikationsvorrichtung KV sind zur Datenübertragung miteinander verbunden ist und bilden zum Managen der Regelziele bzw. der Lastausgleiche eine gemeinsame Funktionseinheit.

Die Vorrichtung VO ist vorzugsweise als Server ausgebildet, der in einer Schnittstelle des Energienetzes EN, wie z.B. in einem Netzverteilungskasten, einer Netztransformatorstation oder einem Netzumspannwerk, angeordnet ist.

In der Vorrichtung VO ist eine Steuereinrichtung STE enthalten, die ein Computer-Programm-Produkt CPP zum Managen der Regelziele bzw. der Lastausgleiche bei der Steuerung der Versorgung, Umwandlung, Speicherung, Einspeisung, Verteilung und/oder des Verbrauchs von Energie in dem Energienetz EN gemäß der FIGUR 1 enthält. Das Computer-Programm-Produkt CPP wiederum enthält einen nicht-flüchtigen, lesbaren Speicher SP, in dem prozessorlesbare Steuerprogrammbefehle eines das Managen der Regelziele bzw. der Lastausgleiche und damit auch den in der FIGUR 3 dargestellten und im Zusammenhang mit dieser beschriebenen Evaluierungs-/Optimierungsprozess EOP durchführenden Programm-Moduls PGM gespeichert sind, und einen mit dem Speicher SP verbundenen Prozessor PZ, der die Steuerprogrammbefehle des Programm-Moduls PGM ausführt.

Zentrales Element in der Vorrichtung VO für das Managen der Regelziele bzw. der Lastausgleiche bzw. das Durchführen des Evaluierungs-/Optimierungsprozesses EOP ist das Programm-Modul PGM, das als APP separat bzw. unabhängig von der Vorrichtung erwerbbar ist und in die Steuereinrichtung STE der Vorrichtung VO hochladbar ist und damit zusammen mit den in der Steuereinrichtung STE üblicherweise bereits vorhandenem Prozessor PZ und Speicher SP das Computer-Programm-Produkt CPP bildet.

Da sich die vorzugsweise als Server ausgebildete Vorrichtung VO bevorzugt in dem Netzverteilungskasten, der Netztransformatorstation oder dem Netzumspannwerk in der Schnittstelle des Energienetzes EN und damit z.B. in dem selbstorganisierenden Energie-Cluster EC-xM1 und/oder dem Sub-Energie-Cluster SEC, EC-xM11, EC-xM111, EC-xM1N1, EC-xM1N11, EC-xM1N12, EC-xM1N13, EC-xM1N111 gemäß der FIGUR 1 befindet und das Programm-Modul PGM als Bestandteil des in der Steuereinrichtung STE der Vorrichtung VO mit dem Prozessor PZ und dem Speicher SP gemeinsam gebildeten Computer-Programm-Produktes CPP für das Durchführen des Evaluierungs-/Optimierungsprozesses EOP maßgeblich verantwortlich ist, kann berechtigterweise davon gesprochen werden, dass der Evaluierungs-/Optimierungsprozess EOP in dem selbstorganisierenden Energie-Cluster EC-xM1 und/oder dem Sub-Energie-Cluster SEC, EC-xM11, EC-xM111, EC-xM1N1, EC-xM1N11, EC-xM1N12, EC-xM1N13, EC-xM1N111 gehostet wird und zentral abläuft.

Darüber hinaus ist in der Vorrichtung VO noch eine Kommunikationseinrichtung KE enthalten, die mit der Steuereinrichtung STE bzw. dem Prozessor PZ verbunden ist. Die Kommunikationseinrichtung KE bildet eine Kommunikationsschnittstelle zu dem Energie-Prosumer, die für eine Datenübertragung, dem Senden oder Empfangen von Daten - den Netzdaten ND, den Netzstrukturdaten NSD, den "Energie-Prosumer"-Struktur-/Profildaten EPSPD, den Anforderungsprofildaten APD, den Markt- und Wirtschaftsdaten NWD, den Wetterprognosedaten WPD, den Steuerungsdaten STD - zu bzw. von dem Energie-Prosumer, die Daten ND, NSD, EPSPD, APD, NWD, WPD, STD auf einer Physikalischen Schicht gemäß dem ISO/OSI-Referenzmodell basierend auf einer Punk-zu-Punkt-Verbindung leitungsgebunden (Option "I"), z.B. über eine metallische Leitung oder Glasfaserkabel, oder über eine Freiraum-Verbindung (Option "II"), z.B. Mobil-, Kurzstrecken- oder Satellitenfunk, und auf einer Netzwerk-Schicht und Transportschicht gemäß dem ISO/OSI-Referenzmodell basierend auf einer Ende-zu-Ende-Verbindung zwischen Endsystemen eines Kommunikationsnetzwerkes leitungsvermittelt oder paketvermittelt, z.B. via Internet basierend auf einem IP/TCP-Protokollstapel, sendet bzw. empfängt.

In Bezug auf das in der FIGUR 4 dargestellte "Energie-Cluster-Service"-System ECSY bedeutet dies, dass für die Datenübertragung zwischen der Vorrichtung VO und der Kommunikationsvorrichtung KV, die bei dem Energie-Prosumer EP, ENT, SEC angeordnet oder diesem zugeordnet ist, die Daten ND, NSD, EPSPD, APD, NWD, WPD, STD auf der Physikalischen Schicht gemäß dem ISO/OSI-Referenzmodell basierend auf der Punkt-zu-Punkt-Verbindung leitungsgebunden (Option "I"), z.B. über die metallische Leitung oder das Glasfaserkabel, oder über die Freiraum-Verbindung (Option "II"), z.B. den Mobil-, Kurzstrecken- oder Satellitenfunk, und auf der Netzwerk-Schicht und Transportschicht gemäß dem ISO/OSI-Referenzmodell basierend auf der Ende-zu-Ende-Verbindung zwischen den Endsystemen des Kommunikationsnetzwerkes leitungsvermittelt oder paketvermittelt, z.B. via Internet basierend auf dem IP/TCP-Protokollstapel, übertragen werden.

Die Steuereinrichtung STE und die Kommunikationseinrichtung KE bilden dabei eine gemeinsame Funktionseinheit derart, dass, wenn
(i) das "Energie-Cluster-Service" ECS zur optimierten Nutzung des Energienetzes EN gemäß der FIGUR 3 für das selbstorganisierende Energie-Cluster EC-xM1 mit jeweils den mindestens einen Energie-Prosumer EP gemäß der FIGUR 1, der in Bezug auf den "Energie-Cluster-Service" der Energienetzteilnehmer ENT und/oder das in dem selbstorganisierenden Energie-Cluster enthaltene, mit diesem kommunikationstechnisch verschachtelte Sub-Energie-Cluster SEC, EC-xM11, EC-xM111, EC-xM1N1, EC-xM1N11, EC-xM1N12, EC-xM1N13, EC-xM1N111 ist, für die cluster-individuell, Energie-Prosumer-bezogen durchzuführende, das Managen beinhaltende Evaluierung/Optimierung bereitgestellt ist, bei dem sich das Energie-Cluster EC-xM1, SEC, EC-xM11, EC-xM111, EC-xM1N1, EC-xM1N11, EC-xM1N12, EC-xM1N13, EC-xM1N111 in dem Energienetz EN netzorientiert und netzdienlich, insbesondere im Sinne einer Stabilisierung des Netzbetriebes, verhält, und
(ii) das Energie-Prosumer-bezogenes Anreiz-Angebot-Modell für den "Energie-Cluster-Service" ECS benutzt ist,
für den am "Energie-Cluster-Service" ECS teilnehmenden Energie-Prosumer EP, ENT, SEC, EC-xM11, EC-xM111, EC-xM1N1, EC-xM1N11, EC-xM1N12, EC-xM1N13, EC-xM1N111, SEC die auf dem Energie-Prosumer-bezogenen Anreiz-Angebot-Modell basierenden angebots-/anreizorientierte Steuerungsdaten STD generiert werden, indem gemäß der Bereitstellung des "Energie-Cluster-Service" ECS zur Durchführung der Evaluierung/Optimierung im Sinne des gesteuerten, geregelten, zielorientierten und/oder selbstlernenden Prinzips PRI, die von der Kommunikationseinrichtung KE empfangenen Netzdaten ND und Netzstrukturdaten NSD des Energienetzes EN, "Energie-Prosumer"-Struktur-/Profildaten EPSPD von dem teilnehmenden Energie-Prosumer EP, ENT, SEC, EC-xM11, EC-xM111, EC-xM1N1, EC-xM1N11, EC-xM1N12, EC-xM1N13, EC-xM1N111, Anforderungsprofildaten APD übergeordneter Energie-Cluster und energiespezifischen Markt- und Wirtschaftsdaten MWD, vorzugsweise dynamisch und im Wesentlichen kontinuierlich, ausgewertet werden.

Nachdem die Steuerungsdaten STD im Zuge der vorstehend erläuterten Auswertung generiert worden sind, können diese von dem Energie-Prosumer in dem Energie-Cluster in regulären Zeitintervallen oder in Abhängigkeit des "Energie-Prosumer"-spezifischen Leistungs- und Speicherzustandes abgefragt werden. Alternativ ist es aber auch möglich, dass die Steuerungsdaten STD als Kommando an den Energie-Prosumer übertragen werden.

## Patentansprüche

1. Verfahren zum Managen von Regelzielen, insbesondere Lastausgleichen, in einem Energienetz (EN) mit einer Vielzahl von Netzanschlussebenen (NAE-A, ...NAE-M, NAE-N),
- die jeweils mittel- oder unmittelbar zur Versorgung, Umwandlung, Speicherung, Einspeisung, Verteilung und/oder zum Verbrauch von Energie, insbesondere von regionaler, zentral gewonnener Energie und/oder von lokaler, dezentral gewonnener Energie, an ein Strommarkt (STM) gekoppelt sind,
- in denen jeweils mindestens ein Energie-Cluster (EC-A2, ECx, EC-xM1, EC-xL2) mit jeweils mindestens einem zur technischen Kommunikation in dem Energie-Cluster (EC-A2, EC-x, EC-xM1, EC-xL2) geeigneten Energie-Prosumer (EP) enthalten ist, der zumindest eines von beiden (i) lokale, dezentral gewonnene Energie produziert, insbesondere erzeugt und abgibt oder bezieht, speichert und wieder abgibt und (ii) lokale oder regionale Energie konsumiert, und
- bei denen die Versorgung, Umwandlung, Speicherung, Einspeisung, Verteilung und/oder der Verbrauch von Energie innerhalb des Energie-Cluster (EC-A2, EC-x, EC-xM1, EC-xL2), clusterübergreifend und/oder netzanschlussebenenübergreifend zwischen dem Energie-Cluster (EC-A2, EC-x, EC-xM1, EC-xL2) und dem Strommarkt (STM) erfolgt,
wobei
a) ein "Energie-Cluster-Service" (ECS) zur optimierten Nutzung des Energienetzes (EN) für mindestens ein selbstorganisierendes Energie-Cluster (EC-xM1) mit jeweils den mindestens einen Energie-Prosumer (EP), der in Bezug auf den "Energie-Cluster-Service" (ECS) ein Energienetzteilnehmer (ENT) und/oder ein in dem selbstorganisierenden Energie-Cluster (EC-xM1) enthaltenes, mit diesem kommunikationstechnisch verschachteltes Sub-Energie-Cluster (SEC, EC-xM11, EC-xM111, EC-xM1N1, EC-xM1N11, EC-xM1N12, EC-xM1N13, EC-xM1N111) ist, für eine cluster-individuell, Energie-Prosumer-bezogen durchzuführende, das Managen beinhaltende Evaluierung/Optimierung bereitgestellt wird, bei dem sich das Energie-Cluster (EC-xM1, SEC, EC-xM11, EC-xM111, EC-xM1N1, EC-xM1N11, EC-xM1N12, EC-xM1N13, EC-xM1N111) in dem Energienetz (EN) netzorientiert und netzdienlich, insbesondere im Sinne einer Stabilisierung des Netzbetriebes, verhält,
b) ein Energie-Prosumer-bezogenen Anreiz-Angebot-Modell für den "Energie-Cluster-Service" (ECS) benutzt wird, bei dem die Energie-Prosumer (EP) in dem selbstorganisierenden Energie-Cluster (EC-xM1) ohne aktive äußere Einwirkung auf Anlagen der Energie-Prosumer (EP) zur Produktion und/oder zum Konsum der Energie anreizbasiert zu einer eigenen Entscheidung geleitet werden und gemäß dieser Entscheidung freiwillig, anreizmotiviert und angebotsgesteuert an einer Teilnahme am "Energie-Cluster-Service" (ECS) und einem daraus resultierenden aktiven Angebot eines zeitlichen Abrufs von Energiemengen oder Energieleistungen beteiligt werden,
c) für den am "Energie-Cluster-Service" (ECS) teilnehmenden Energie-Prosumer (EP, ENT, SEC, EC-xM11, EC-xM111, EC-xM1N1, EC-xM1N11, EC-xM1N12, EC-xM1N13, EC-xM1N111, SEC) und auf dem Energie-Prosumer-bezogenen Anreiz-Angebot-Modell basierenden angebots-/anreizorientierten Steuerungsdaten (STD) generiert werden, indem gemäß der Bereitstellung des "Energie-Cluster-Service" (ECS) zur Durchführung der Evaluierung/Optimierung im Sinne eines gesteuerten, geregelten, zielorientierten und/oder selbstlernenden Prinzips (PRI) übermittelte Netzdaten (ND) und Netzstrukturdaten (NSD) des Energienetzes (EN), "Energie-Prosumer"-Struktur-/Profildaten (EPSPD) von dem teilnehmenden Energie-Prosumer (EP, ENT, SEC, EC-xM11, EC-xM111, EC-xM1N1, EC-xM1N11, EC-xM1N12, EC-xM1N13, EC-xM1N111), Anforderungsprofildaten (APD) übergeordneter Energie-Cluster und energiespezifische Markt- und Wirtschaftsdaten (MWD), insbesondere dynamisch und im Wesentlichen kontinuierlich, ausgewertet werden.

2. Verfahren nach Anspruch 1, wobei
die Steuerungsdaten (STD) von dem Energie-Prosumer (EP, ENT, SEC, EC-xM11, EC-xM111, EC-xM1N1, EC-xM1N11, EC-xM1N12, EC-xM1N13, EC-xM1N111) in regulären Zeitintervallen oder in Abhängigkeit des "Energie-Prosumer"-spezifischen Leistungs- und Speicherzustandes abgefragt oder als Kommando an den Energie-Prosumer (EP, ENT, SEC, EC-xM11, EC-xM111, EC-xM1N1, EC-xM1N11, EC-xM1N12, EC-xM1N13, EC-xM1N111) übertragen werden.

3. Verfahren nach Anspruch 1 oder 2, wobei
die Auswertung-basierte Evaluierung/Optimierung mit einem in dem selbstorganisierenden Energie-Cluster (EC-xM1) und/oder dem Sub-Energie-Cluster (SEC, EC-xM11, EC-xM111, EC-xM1N1, EC-xM1N11, EC-xM1N12, EC-xM1N13, EC-xM1N111) gehosteten und zentral ablaufenden Evaluierungs-/Optimierungsprozess (EOP) durchgeführt wird.

4. Computer-Programm-Produkt (CPP) zum Managen von Regelzielen, insbesondere Lastausgleichen, in einem Energienetz (EN) mit einer Vielzahl von Netzanschlussebenen (NAE-A, ...NAE-M, NAE-N),
- die jeweils mittel- oder unmittelbar zur Versorgung, Umwandlung, Speicherung, Einspeisung, Verteilung und/oder zum Verbrauch von Energie, insbesondere von regionaler, zentral gewonnener Energie und/oder von lokaler, dezentral gewonnener Energie, an ein Strommarkt (STM) gekoppelt sind,
- in denen jeweils mindestens ein Energie-Cluster (EC-A2, ECx, EC-xM1, EC-xL2) mit jeweils mindestens einem zur technischen Kommunikation in dem Energie-Cluster (EC-A2, EC-x, EC-xM1, EC-xL2) geeigneten Energie-Prosumer (EP) enthalten ist, der zumindest eines von beiden (i) lokale, dezentral gewonnene Energie produziert, insbesondere erzeugt und abgibt oder bezieht, speichert und wieder abgibt und (ii) lokale oder regionale Energie konsumiert, und
- bei denen die Versorgung, Umwandlung, Speicherung, Einspeisung, Verteilung und/oder der Verbrauch von Energie innerhalb des Energie-Cluster (EC-A2, EC-x, EC-xM1, EC-xL2), clusterübergreifend und/oder netzanschlussebenenübergreifend zwischen dem Energie-Cluster (EC-A2, EC-x, EC-xM1, EC-xL2) und dem Strommarkt (STM) erfolgt,
wobei
a) ein nicht-flüchtiger, lesbarer Speicher (SP), in dem prozessorlesbare Steuerprogrammbefehle eines das Managen der Regelziele in dem Energienetz (EN) durchführenden Programm-Moduls (PGM) gespeichert sind, und ein mit dem Speicher (SP) verbundener Prozessor (PZ) vorgesehen sind, bei dem der Prozessor (PZ)
a1) die Steuerprogrammbefehle des Programm-Moduls (PGM) ausführt und
a2) dabei, wenn (i) ein "Energie-Cluster-Service" (ECS) zur optimierten Nutzung des Energienetzes (EN) für mindestens ein selbstorganisierendes Energie-Cluster (EC-xM1) mit jeweils den mindestens einen Energie-Prosumer (EP), der in Bezug auf den "Energie-Cluster-Service" (ECS) ein Energienetzteilnehmer (ENT) und/oder ein in dem selbstorganisierenden Energie-Cluster (EC-xM1) enthaltenes, mit diesem kommunikationstechnisch verschachteltes Sub-Energie-Cluster (SEC, EC-xM11, EC-xM111, EC-xM1N1, EC-xM1N11, EC-xM1N12, EC-xM1N13, EC-xM1N111) ist, für eine cluster-individuell, Energie-Prosumer-bezogen durchzuführende, das Managen beinhaltende Evaluierung/Optimierung bereitgestellt ist, bei dem sich das Energie-Cluster (EC-xM1, SEC, EC-xM11, EC-xM111, EC-xM1N1, EC-xM1N11, EC-xM1N12, EC-xM1N13, EC-xM1N111) in dem Energienetz (EN) netzorientiert und netzdienlich, insbesondere im Sinne einer Stabilisierung des Netzbetriebes, verhält, und (ii) ein Energie-Prosumer-bezogenes Anreiz-Angebot-Modell für den "Energie-Cluster-Service" (ECS) benutzt ist, bei dem die Energie-Prosumer (EP) in dem selbstorganisierenden Energie-Cluster (EC-xM1) ohne aktive äußere Einwirkung auf Anlagen der Energie-Prosumer (EP) zur Produktion und/oder zum Konsum der Energie anreizbasiert zu einer eigenen Entscheidung geleitet werden und gemäß dieser Entscheidung freiwillig, anreizmotiviert und angebotsgesteuert an einer Teilnahme am "Energie-Cluster-Service" (ECS) und einem daraus resultierenden aktiven Angebot eines zeitlichen Abrufs von Energiemengen oder Energieleistungen beteiligt werden,
für den am "Energie-Cluster-Service" (ECS) teilnehmenden Energie-Prosumer (EP, ENT, SEC, EC-xM11, EC-xM111, EC-xM1N1, EC-xM1N11, EC-xM1N12, EC-xM1N13, EC-xM1N111, SEC) und auf dem Energie-Prosumer-bezogenen Anreiz-Angebot-Modell basierende angebots-/anreizorientierte Steuerungsdaten (STD) generiert, indem gemäß der Bereitstellung des "Energie-Cluster-Service" (ECS) zur Durchführung der Evaluierung/Optimierung im Sinne eines gesteuerten, geregelten, zielorientierten und/oder selbstlernenden Prinzips (PRI) übermittelte Netzdaten (ND) und Netzstrukturdaten (NSD) des Energienetzes (EN), "Energie-Prosumer"-Struktur-/Profildaten (EPSPD) von dem teilnehmenden Energie-Prosumer (EP, ENT, SEC, EC-xM11, EC-xM111, EC-xM1N1, EC-xM1N11, EC-xM1N12, EC-xM1N13, EC-xM1N111), Anforderungsprofildaten (APD) übergeordneter Energie-Cluster und energiespezifische Markt- und Wirtschaftsdaten (MWD), insbesondere dynamisch und im Wesentlichen kontinuierlich, ausgewertet werden.

5. Computer-Programm-Produkt (CPP) nach Anspruch 4, wobei der Prozessor (PZ) und das Programm-Modul (PGM) derart ausgebildet sind, dass die Steuerungsdaten (STD) von dem Energie-Prosumer (EP, ENT, SEC, EC-xM11, EC-xM111, EC-xM1N1, EC-xM1N11, EC-xM1N12, EC-xM1N13, EC-xM1N111) in regulären Zeitintervallen oder in Abhängigkeit des "Energie-Prosumer"-spezifischen Leistungs- und Speicherzustandes abgefragt oder als Kommando an den Energie-Prosumer (EP, ENT, SEC, EC-xM11, EC-xM111, EC-xM1N1, EC-xM1N11, EC-xM1N12, EC-xM1N13, EC-xM1N111) übertragen werden.

6. Computer-Programm-Produkt (CPP) nach Anspruch 4 oder 5, wobei
der Prozessor (PZ) und das Programm-Modul (PGM) derart ausgebildet sind, dass die Auswertung-basierte Evaluierung/Optimierung mit einem Evaluierungs-/Optimierungsprozess (EOP) durchgeführt wird.

7. Vorrichtung (VO) zum Managen von Regelzielen, insbesondere Lastausgleichen, in einem Energienetz (EN) mit einer Vielzahl von Netzanschlussebenen (NAE-A, ...NAE-M, NAE-N),
- die jeweils mittel- oder unmittelbar zur Versorgung, Umwandlung, Speicherung, Einspeisung, Verteilung und/oder zum Verbrauch von Energie, insbesondere von regionaler, zentral gewonnener Energie und/oder von lokaler, dezentral gewonnener Energie, an ein Strommarkt (STM) gekoppelt sind,
- in denen jeweils mindestens ein Energie-Cluster (EC-A2, ECx, EC-xM1, EC-xL2) mit jeweils mindestens einem zur technischen Kommunikation in dem Energie-Cluster (EC-A2, EC-x, EC-xM1, EC-xL2) geeigneten Energie-Prosumer (EP) enthalten ist, der zumindest eines von beiden (**i**) lokale, dezentral gewonnene Energie produziert, insbesondere erzeugt und abgibt oder bezieht, speichert und wieder abgibt und (**ii**) lokale oder regionale Energie konsumiert, und
- bei denen die Versorgung, Umwandlung, Speicherung, Einspeisung, Verteilung und/oder der Verbrauch von Energie innerhalb des Energie-Cluster (EC-A2, EC-x, EC-xM1, EC-xL2), clusterübergreifend und/oder netzanschlussebenenübergreifend zwischen dem Energie-Cluster (EC-A2, EC-x, EC-xM1, EC-xL2) und dem Strommarkt (STM) erfolgt,
wobei
eine Steuereinrichtung (STE) vorgesehen ist, die ein Computer-Programm-Produkt (CPP) zum Managen von Regelzielen in dem Energienetz (EN) mit einem nicht-flüchtigen, lesbaren Speicher (SP), in dem prozessorlesbare Steuerprogrammbefehle eines das Managen der Regelziele durchführenden Programm-Moduls (PGM) gespeichert sind, und einem mit dem Speicher (SP) verbundenen, die Steuerprogrammbefehle des Programm-Moduls (PGM) ausführenden Prozessor (PZ) enthält und die mit einer Kommunikationseinrichtung (KE) verbunden ist und dabei mit der Kommunikationseinrichtung (KE) eine gemeinsame Funktionseinheit derart bildet, dass, wenn
(i) ein "Energie-Cluster-Service" (ECS) zur optimierten Nutzung des Energienetzes (EN) für mindestens ein selbstorganisierendes Energie-Cluster (EC-xM1) mit jeweils den mindestens einen Energie-Prosumer (EP), der in Bezug auf den "Energie-Cluster-Service" (ECS) ein Energienetzteilnehmer (ENT) und/oder ein in dem selbstorganisierenden Energie-Cluster (EC-xM1) enthaltenes, mit diesem kommunikationstechnisch verschachteltes Sub-Energie-Cluster (SEC, EC-xM11, EC-xM111, EC-xM1N1, EC-xM1N11, EC-xM1N12, EC-xM1N13, EC-xM1N111) ist, für eine cluster-individuell, Energie-Prosumer-bezogen durchzuführende, das Managen beinhaltende Evaluierung/Optimierung bereitgestellt ist, bei dem sich das Energie-Cluster (EC-xM1, SEC, EC-xM11, EC-xM111, EC-xM1N1, EC-xM1N11, EC-xM1N12, EC-xM1N13, EC-xM1N111) in dem Energienetz (EN) netzorientiert und netzdienlich, insbesondere im Sinne einer Stabilisierung des Netzbetriebes, verhält, und
(ii) ein Energie-Prosumer-bezogenes Anreiz-Angebot-Modell für den "Energie-Cluster-Service" (ECS) benutzt ist, bei dem die Energie-Prosumer (EP) in dem selbstorganisierenden Energie-Cluster (EC-xM1) ohne aktive äußere Einwirkung auf Anlagen der Energie-Prosumer (EP) zur Produktion und/oder zum Konsum der Energie anreizbasiert zu einer eigenen Entscheidung geleitet werden und gemäß dieser Entscheidung freiwillig, anreizmotiviert und angebotsgesteuert an einer Teilnahme am "Energie-Cluster-Service" (ECS) und einem daraus resultierenden aktiven Angebot eines zeitlichen Abrufs von Energiemengen oder Energieleistungen beteiligt werden,
für den am "Energie-Cluster-Service" (ECS) teilnehmenden Energie-Prosumer (EP, ENT, SEC, EC-xM11, EC-xM111, EC-xM1N1, EC-xM1N11, EC-xM1N12, EC-xM1N13, EC-xM1N111, SEC) und auf dem Energie-Prosumer-bezogenen Anreiz-Angebot-Modell basierende angebots-/anreizorientierte Steuerungsdaten (STD) generiert werden, indem gemäß der Bereitstellung des "Energie-Cluster-Service" (ECS) zur Durchführung der Evaluierung/Optimierung im Sinne eines gesteuerten, geregelten, zielorientierten und/oder selbstlernenden Prinzips (PRI) über die Kommunikationseinrichtung (KE) übermittelte Netzdaten (ND) und Netzstrukturdaten (NSD) des Energienetzes (EN), "Energie-Prosumer"-Struktur-/Profildaten (EPSPD) von dem teilnehmenden Energie-Prosumer (EP, ENT, SEC, EC-xM11, EC-xM111, EC-xM1N1, EC-xM1N11, EC-xM1N12, EC-xM1N13, EC-xM1N111), Anforderungsprofildaten (APD) übergeordneter Energie-Cluster und energiespezifische Markt- und Wirtschaftsdaten (MWD), insbesondere dynamisch und im Wesentlichen kontinuierlich, ausgewertet werden.

8. Vorrichtung (VO) nach Anspruch 7, wobei
die Steuereinheit (STE) mit dem Prozessor (PZ) und dem Programm-Modul (PGM) in dem Computer-Programm-Produkt (CPP) und die Kommunikationseinrichtung (KE) derart ausgebildet sind,
dass die Steuerungsdaten (STD) von dem Energie-Prosumer (EP, ENT, SEC, EC-xM11, EC-xM111, EC-xM1N1, EC-xM1N11, EC-xM1N12, EC-xM1N13, EC-xM1N111) in regulären Zeitintervallen oder in Abhängigkeit des "Energie-Prosumer"-spezifischen Leistungs- und Speicherzustandes abgefragt oder als Kommando an den Energie-Prosumer (EP, ENT, SEC, EC-xM11, EC-xM111, EC-xM1N1, EC-xM1N11, EC-xM1N12, EC-xM1N13, EC-xM1N111) übertragen werden.

9. Vorrichtung (VO) nach Anspruch 7 oder 8, wobei
der Prozessor (PZ) und das Programm-Modul (PGM) in dem Computer-Programm-Produkt (CPP) der Steuereinheit (STE) derart ausgebildet sind, dass die Auswertung-basierte Evaluierung/Optimierung mittels einem Evaluierungs-/Optimierungsprozess (EOP) durchgeführt wird.

10. Vorrichtung (VO) nach Anspruch 7, 8 oder 9, wobei
die Kommunikationseinrichtung (KE) als eine Kommunikationsschnittstelle zu dem Energie-Prosumer (EP, ENT, SEC, EC-xM11, EC-xM111, EC-xM1N1, EC-xM1N11, EC-xM1N12, EC-xM1N13, EC-xM1N111) ausgebildet ist, die für eine Datenübertragung, dem Senden oder Empfangen von Daten (ND, NSD, EPSPD, APD, NWD, WPD, STD) zu bzw. von dem Energie-Prosumer (EP, ENT, SEC, EC-xM11, EC-xM111, EC-xM1N1, EC-xM1N11, EC-xM1N12, EC-xM1N13, EC-xM1N111), die Daten (ND, NSD, EPSPD, APD, NWD, WPD, STD) auf einer Physikalischen Schicht gemäß dem ISO/OSI-Referenzmodell basierend auf einer Punk-zu-Punkt-Verbindung leitungsgebunden (Option "I"), z.B. über eine metallische Leitung oder ein Glasfaserkabel, oder über eine Freiraum-Verbindung (Option "II"), z.B. einen Mobil-, Kurzstrecken- oder Satellitenfunk, und auf einer Netzwerk-Schicht und Transportschicht gemäß dem ISO/OSI-Referenzmodell basierend auf einer Ende-zu-Ende-Verbindung zwischen Endsystemen eines Kommunikationsnetzwerkes leitungsvermittelt oder paketvermittelt, z.B. via Internet basierend auf einem IP/TCP-Protokollstapel, sendet bzw. empfängt.

11. Vorrichtung (VO) nach einem der Ansprüche 7 bis 10, wobei einen Server der in einer Schnittstelle des Energienetzes (EN), wie beispielsweise in einem Netzverteilungskasten, einer Netztransformatorstation oder einem Netzumspannwerk, angeordnet ist.

12. "Energie-Cluster-Service"-System (ECSY) zum Managen von Regelzielen, insbesondere Lastausgleichen, in einem Energienetz (EN) mit einer Vielzahl von Netzanschlussebenen (NAE-A, ...NAE-M, NAE-N),
- die jeweils mittel- oder unmittelbar zur Versorgung, Umwandlung, Speicherung, Einspeisung, Verteilung und/oder zum Verbrauch von Energie, insbesondere von regionaler, zentral gewonnener Energie und/oder von lokaler, dezentral gewonnener Energie, an ein Strommarkt (STM) gekoppelt sind,
- in denen jeweils mindestens ein Energie-Cluster (EC-A2, ECx, EC-xM1, EC-xL2) mit jeweils mindestens einem zur technischen Kommunikation in dem Energie-Cluster (EC-xM1, EC-xL2) geeigneten Energie-Prosumer (EP) enthalten ist, der zumindest eines von beiden (**i**) lokale, dezentral gewonnene Energie produziert, insbesondere erzeugt und abgibt oder bezieht, speichert und wieder abgibt und (**ii**) lokale oder regionale Energie konsumiert und der für die technische Kommunikation eine Kommunikationsvorrichtung (KV) aufweist, und
- bei denen die Versorgung, Umwandlung, Speicherung, Einspeisung, Verteilung und/oder der Verbrauch von Energie innerhalb des Energie-Cluster (EC-A2, EC-x, EC-xM1, EC-xL2), clusterübergreifend und/oder netzanschlussebenenübergreifend zwischen dem Energie-Cluster (EC-A2, EC-x, EC-xM1, EC-xL2) und dem Strommarkt (STM) erfolgt,
wobei
eine Vorrichtung (VO) nach einem der Ansprüche 7 bis 11 und eine Kommunikationsvorrichtung (KV), die mit der Vorrichtung (VO) zur Datenübertragung verbunden ist, zur Durchführung des Verfahrens nach einem der Ansprüche 1 bis 3 eine gemeinsame Funktionseinheit bilden.

13. "Energie-Cluster-Service"-System (ECSY) nach einem Anspruch 12, wobei
die aus der Vorrichtung (VO) und der Kommunikationsvorrichtung (KV) gemeinsam gebildete Funktionseinheit derart ausgebildet ist, dass für die Datenübertragung Daten (ND, NSD, EPSPD, APD, NWD, WPD, STD) auf einer Physikalischen Schicht gemäß dem ISO/OSI-Referenzmodell basierend auf einer Punktzu-Punkt-Verbindung leitungsgebunden (Option "I"), z.B. über eine metallische Leitung oder ein Glasfaserkabel, oder über eine Freiraum-Verbindung (Option "II"), z.B. einen Mobil-, Kurzstrecken- oder Satellitenfunk, und auf einer Netzwerk-Schicht und Transportschicht gemäß dem ISO/OSI-Referenzmodell basierend auf einer Ende-zu-Ende-Verbindung zwischen Endsystemen eines Kommunikationsnetzwerkes leitungsvermittelt oder paketvermittelt, z.B. via Internet basierend auf einem IP/TCP-Protokollstapel, übertragen werden.

## Claims

1. Method for managing control targets, in particular load balancing processes, in an energy network (EN) having a multiplicity of network connection levels (NAE-A, ...NAE-M, NAE-N),
- which are coupled to a power market (STM) in each case indirectly or directly for the supply, conversion, storage, infeed, distribution and/or consumption of energy, in particular of regional energy obtained centrally and/or of local energy obtained in a decentralized manner,
- which contain in each case at least one energy cluster (EC-A2, EC-x, EC-xM1, EC-xL2) with in each case at least one energy prosumer (EP) which is suitable for technical communication in the energy cluster (EC-A2, EC-x, EC-xM1, EC-xL2) and which does at least one of two things: (i) produces, in particular generates and emits or acquires, stores and re-emits, local energy obtained in a decentralized manner and (ii) consumes local or regional energy, and
- in which the supply, conversion, storage, infeed, distribution and/or consumption of energy within the energy cluster (EC-A2, EC-x, EC-xM1, EC-xL2) are/is effected across clusters and/or across network connection levels between the energy cluster (EC-A2, EC-x, EC-xM1, EC-xL2) and the power market (STM),
wherein
a) an "energy cluster service" (ECS) for optimized use of the energy network (EN) for at least one self-organizing energy cluster (EC-xM1) with in each case the at least one energy prosumer (EP), which, with regard to the "energy cluster service" (ECS), is an energy network subscriber (ENT) and/or a sub-energy cluster (SEC, EC-xM11, EC-xM111, EC-xM1N1, EC-xM1N11, EC-xM1N12, EC-xM1N13, EC-xM1N111) which is contained in the self-organizing energy cluster (EC-xM1) and is interlinked with the latter in terms of communication technology, is provided for an evaluation/optimization which is to be carried out in a cluster-specific and energy-prosumer-related manner and which includes the management, in the case of which the energy cluster (EC-xM1, SEC, EC-xM11, EC-xM111, EC-xM1N1, EC-xM1N11, EC-xM1N12, EC-xM1N13, EC-xM1N111) in the energy network (EN) behaves in a network-oriented and network-useful manner, in particular with the aim of stabilizing network operation,
b) an energy-prosumer-related incentive-supply model is used for the "energy cluster service" (ECS), in the case of which the energy prosumers (EP) in the self-organizing energy cluster (EC-xM1), without actively externally influencing installations of the energy prosumers (EP) to produce and/or to consume the energy, are guided in an incentive-based manner to reach their own decision, and, in accordance with this decision, are involved, in a voluntary, incentive-motivated and supply-controlled manner, in a participation in the "energy cluster service" (ECS) and a resulting active supply of a temporal retrieval of amounts of energy or energy outputs,
c) supply-/incentive-oriented control data (STD) that are for the energy prosumer (EP, ENT, SEC, EC-xM11, EC-xM111, EC-xM1N1, EC-xM1N11, EC-xM1N12, EC-xM1N13, EC-xM1N111, SEC) participating in the "energy cluster service" (ECS) and are based on the energy-prosumer-related incentive-supply model are generated by virtue of, in accordance with the provision of the "energy cluster service" (ECS) for carrying out the evaluation/optimization in the sense of an open-loop-controlled, closed-loop-controlled, target-oriented and/or self-learning principle (PRI), communicated network data (ND) and network structure data (NSD) of the energy network (EN), "energy prosumer" structure/profile data (EPSPD) from the participating energy prosumer (EP, ENT, SEC, EC-xM11, EC-xM111, EC-xM1N1, EC-xM1N11, EC-xM1N12, EC-xM1N13, EC-xM1N111), requirement profile data (APD) of superordinate energy clusters and energy-specific market and economy data (MWD) being evaluated, in particular in a dynamic and substantially continuous manner.

2. Method according to Claim 1, wherein
the control data (STD) are interrogated by the energy prosumer (EP, ENT, SEC, EC-xM11, EC-xM111, EC-xM1N1, EC-xM1N11, EC-xM1N12, EC-xM1N13, EC-xM1N111) at regular time intervals or depending on the "energy prosumer"-specific power and storage state or are transmitted as a command to the energy prosumer (EP, ENT, SEC, EC-xM11, EC-xM111, EC-xM1N1, EC-xM1N11, EC-xM1N12, EC-xM1N13, EC-xM1N111).

3. Method according to Claim 1 or 2, wherein
the analysis-based evaluation/optimization is carried out by means of an evaluation/optimization process (EOP) which is hosted and proceeds centrally in the self-organizing energy cluster (EC-xM1) and/or the sub-energy cluster (SEC, EC-xM11, EC-xM111, EC-xM1N1, EC-xM1N11, EC-xM1N12, EC-xM1N13, EC-xM1N111).

4. Computer program product (CPP) for managing control targets, in particular load balancing processes, in an energy network (EN) having a multiplicity of network connection levels (NAE-A, ...NAE-M, NAE-N),
- which are coupled to a power market (STM) in each case indirectly or directly for the supply, conversion, storage, infeed, distribution and/or consumption of energy, in particular of regional energy obtained centrally and/or of local energy obtained in a decentralized manner,
- which contain in each case at least one energy cluster (EC-A2, EC-x, EC-xM1, EC-xL2) with in each case at least one energy prosumer (EP) which is suitable for technical communication in the energy cluster (EC-A2, EC-x, EC-xM1, EC-xL2) and which does at least one of two things: (i) produces, in particular generates and emits or acquires, stores and re-emits, local energy obtained in a decentralized manner and (ii) consumes local or regional energy, and
- in which the supply, conversion, storage, infeed, distribution and/or consumption of energy within the energy cluster (EC-A2, EC-x, EC-xM1, EC-xL2) are/is effected across clusters and/or across network connection levels between the energy cluster (EC-A2, EC-x, EC-xM1, EC-xL2) and the power market (STM),
wherein
a) a non-volatile, readable memory (SP), in which processor-readable control program instructions of a program module (PGM) that carries out the management of the control targets in the energy network (EN) are stored, and a processor (PZ) connected to the memory (SP) are provided, in the case of which the processor (PZ)
a1) executes the control program instructions of the program module (PGM), and
a2) in this case, if (i) an "energy cluster service" (ECS) for optimized use of the energy network (EN) for at least one self-organizing energy cluster (EC-xM1) with in each case the at least one energy prosumer (EP), which, with regard to the "energy cluster service" (ECS), is an energy network subscriber (ENT) and/or a sub-energy cluster (SEC, EC-xM11, EC-xM111, EC-xM1N1, EC-xM1N11, EC-xM1N12, EC-xM1N13, EC-xM1N111) which is contained in the self-organizing energy cluster (EC-xM1) and is interlinked with the latter in terms of communication technology, is provided for an evaluation/optimization which is to be carried out in a cluster-specific and energy-prosumer-related manner and which includes the management, in the case of which the energy cluster (EC-xM1, SEC, EC-xM11, EC-xM111, EC-xM1N1, EC-xM1N11, EC-xM1N12, EC-xM1N13, EC-xM1N111) in the energy network (EN) behaves in a network-oriented and network-useful manner, in particular with the aim of stabilizing network operation, and (ii) an energy-prosumer-related incentive-supply model is used for the "energy cluster service" (ECS), in the case of which the energy prosumers (EP) in the self-organizing energy cluster (EC-xM1), without actively externally influencing installations of the energy prosumers (EP) to produce and/or to consume the energy, are guided in an incentive-based manner to reach their own decision, and, in accordance with this decision, are involved, in a voluntary, incentive-motivated and supply-controlled manner, in a participation in the "energy cluster service" (ECS) and a resulting active supply of a temporal retrieval of amounts of energy or energy outputs,
generates supply-/incentive-oriented control data (STD) that are for the energy prosumer (EP, ENT, SEC, EC-xM11, EC-xM111, EC-xM1N1, EC-xM1N11, EC-xM1N12, EC-xM1N13, EC-xM1N111, SEC) participating in the "energy cluster service" (ECS) and are based on the energy-prosumer-related incentive-supply model by virtue of, in accordance with the provision of the "energy cluster service" (ECS) for carrying out the evaluation/optimization in the sense of an open-loop-controlled, closed-loop-controlled, target-oriented and/or self-learning principle (PRI), communicated network data (ND) and network structure data (NSD) of the energy network (EN), "energy prosumer" structure/profile data (EPSPD) from the participating energy prosumer (EP, ENT, SEC, EC-xM11, EC-xM111, EC-xM1N1, EC-xM1N11, EC-xM1N12, EC-xM1N13, EC-xM1N111), requirement profile data (APD) of superordinate energy clusters and energy-specific market and economy data (MWD) being evaluated, in particular in a dynamic and substantially continuous manner.

5. Computer program product (CPP) according to Claim 4, wherein
the processor (PZ) and the program module (PGM) are configured in such a way that the control data (STD) are interrogated by the energy prosumer (EP, ENT, SEC, EC-xM11, EC-xM111, EC-xM1N1, EC-xM1N11, EC-xM1N12, EC-xM1N13, EC-xM1N111) at regular time intervals or depending on the "energy prosumer"-specific power and storage state or are transmitted as a command to the energy prosumer (EP, ENT, SEC, EC-xM11, EC-xM111, EC-xM1N1, EC-xM1N11, EC-xM1N12, EC-xM1N13, EC-xM1N111).

6. Computer program product (CPP) according to Claim 4 or 5, wherein
the processor (PZ) and the program module (PGM) are configured in such a way that the analysis-based evaluation/optimization is carried out by means of an evaluation/optimization process (EOP) .

7. Apparatus (VO) for managing control targets, in particular load balancing processes, in an energy network (EN) having a multiplicity of network connection levels (NAE-A, ...NAE-M, NAE-N),
- which are coupled to a power market (STM) in each case indirectly or directly for the supply, conversion, storage, infeed, distribution and/or consumption of energy, in particular of regional energy obtained centrally and/or of local energy obtained in a decentralized manner,
- which contain in each case at least one energy cluster (EC-A2, EC-x, EC-xM1, EC-xL2) with in each case at least one energy prosumer (EP) which is suitable for technical communication in the energy cluster (EC-A2, EC-x, EC-xM1, EC-xL2) and which does at least one of two things: (**i**) produces, in particular generates and emits or acquires, stores and re-emits, local energy obtained in a decentralized manner and (**ii**) consumes local or regional energy, and
- in which the supply, conversion, storage, infeed, distribution and/or consumption of energy within the energy cluster (EC-A2, EC-x, EC-xM1, EC-xL2) are/is effected across clusters and/or across network connection levels between the energy cluster (EC-A2, EC-x, EC-xM1, EC-xL2) and the power market (STM),
wherein
a control device (STE) is provided, which comprises a computer program product (CPP) for managing control targets in the energy network (EN) comprising a non-volatile, readable memory (SP), in which processor-readable control program instructions of a program module (PGM) that carries out the management of the control targets are stored, and a processor (PZ) connected to the memory (SP), said processor executing the control program instructions of the program module (PGM), and which control device is connected to a communication device (KE) and in this case together with the communication device (KE) forms a common functional unit in such a way that, if
(**i**) an "energy cluster service" (ECS) for optimized use of the energy network (EN) for at least one self-organizing energy cluster (EC-xM1) with in each case the at least one energy prosumer (EP), which, with regard to the "energy cluster service" (ECS), is an energy network subscriber (ENT) and/or a sub-energy cluster (SEC, EC-xM11, EC-xM111, EC-xM1N1, EC-xM1N11, EC-xM1N12, EC-xM1N13, EC-xM1N111) which is contained in the self-organizing energy cluster (EC-xM1) and is interlinked with the latter in terms of communication technology, is provided for an evaluation/optimization which is to be carried out in a cluster-specific and energy-prosumer-related manner and which includes the management, in the case of which the energy cluster (EC-xM1, SEC, EC-xM11, EC-xM111, EC-xM1N1, EC-xM1N11, EC-xM1N12, EC-xM1N13, EC-xM1N111) in the energy network (EN) behaves in a network-oriented and network-useful manner, in particular with the aim of stabilizing network operation, and
(ii) an energy-prosumer-related incentive-supply model is used for the "energy cluster service" (ECS), in the case of which the energy prosumers (EP) in the self-organizing energy cluster (EC-xM1), without actively externally influencing installations of the energy prosumers (EP) to produce and/or to consume the energy, are guided in an incentive-based manner to reach their own decision, and, in accordance with this decision, are involved, in a voluntary, incentive-motivated and supply-controlled manner, in a participation in the "energy cluster service" (ECS) and a resulting active supply of a temporal retrieval of amounts of energy or energy outputs,
supply-/incentive-oriented control data (STD) that are for the energy prosumer (EP, ENT, SEC, EC-xM11, EC-xM111, EC-xM1N1, EC-xM1N11, EC-xM1N12, EC-xM1N13, EC-xM1N111, SEC) participating in the "energy cluster service" (ECS) and are based on the energy-prosumer-related incentive-supply model are generated by virtue of, in accordance with the provision of the "energy cluster service" (ECS) for carrying out the evaluation/optimization in the sense of an open-loop-controlled, closed-loop-controlled, target-oriented and/or self-learning principle (PRI), network data (ND) and network structure data (NSD) of the energy network (EN), "energy prosumer" structure/profile data (EPSPD) from the participating energy prosumer (EP, ENT, SEC, EC-xM11, EC-xM111, EC-xM1N1, EC-xM1N11, EC-xM1N12, EC-xM1N13, EC-xM1N111), requirement profile data (APD) of superordinate energy clusters and energy-specific market and economy data (MWD), which are communicated via the communication device (KE), being evaluated, in particular in a dynamic and substantially continuous manner.

8. Apparatus (VO) according to Claim 7, wherein
the control unit (STE) with the processor (PZ) and the program module (PGM) in the computer program product (CPP) and the communication device (KE) are configured in such a way that the control data (STD) are interrogated by the energy prosumer (EP, ENT, SEC, EC-xM11, EC-xM111, EC-xM1N1, EC-xM1N11, EC-xM1N12, EC-xM1N13, EC-xM1N111) at regular time intervals or depending on the "energy prosumer"-specific power and storage state or are transmitted as a command to the energy prosumer (EP, ENT, SEC, EC-xM11, EC-xM111, EC-xM1N1, EC-xM1N11, EC-xM1N12, EC-xM1N13, EC-xM1N111).

9. Apparatus (VO) according to Claim 7 or 8, wherein
the processor (PZ) and the program module (PGM) in the computer program product (CPP) of the control unit (STE) are configured in such a way that the analysis-based evaluation/optimization is carried out by means of an evaluation/optimization process (EOP).

10. Apparatus (VO) according to Claim 7, 8 or 9, wherein
the communication device (KE) is configured as a communication interface to the energy prosumer (EP, ENT, SEC, EC-xM11, EC-xM111, EC-xM1N1, EC-xM1N11, EC-xM1N12, EC-xM1N13, EC-xM1N111), which communication interface, for a data transfer, for the transmission or reception of data (ND, NSD, EPSPD, APD, NWD, WPD, STD) to or from the energy prosumer (EP, ENT, SEC, EC-xM11, EC-xM111, EC-xM1N1, EC-xM1N11, EC-xM1N12, EC-xM1N13, EC-xM1N111), transmits or receives the data (ND, NSD, EPSPD, APD, NWD, WPD, STD) on a physical layer in accordance with the ISO/OSI reference model on the basis of a point-to-point connection in a line-based fashion (option "I"), e.g. via a metallic line or a fiber-optic cable, or via a free space connection (option "II"), e.g. mobile, short-range or satellite communications, and on a network layer and transport layer in accordance with the ISO/OSI reference model on the basis of an end-to-end connection between end systems of a communication network in a circuit-switched or packet-switched fashion, e.g. via the Internet on the basis of an IP/TCP protocol stack.

11. Apparatus (VO) according to one of Claims 7 to 10, wherein a server is arranged in an interface of the energy network (EN), such as, for example, in a network distribution box, a network transformer station or a network substation.

12. "Energy cluster service" system (ECSY) for managing control targets, in particular load balancing processes, in an energy network (EN) having a multiplicity of network connection levels (NAE-A, ...NAE-M, NAE-N),
- which are coupled to a power market (STM) in each case indirectly or directly for the supply, conversion, storage, infeed, distribution and/or consumption of energy, in particular of regional energy obtained centrally and/or of local energy obtained in a decentralized manner,
- which contain in each case at least one energy cluster (EC-A2, EC-x, EC-xM1, EC-xL2) with in each case at least one energy prosumer (EP) which is suitable for technical communication in the energy cluster (EC-xM1, EC-xL2) and which does at least one of two things: (i) produces, in particular generates and emits or acquires, stores and re-emits, local energy obtained in a decentralized manner and (ii) consumes local or regional energy, and which has a communication apparatus (KV) for the technical communication, and
- in which the supply, conversion, storage, infeed, distribution and/or consumption of energy within the energy cluster (EC-A2, EC-x, EC-xM1, EC-xL2) are/is effected across clusters and/or across network connection levels between the energy cluster (EC-A2, EC-x, EC-xM1, EC-xL2) and the power market (STM),
wherein
an apparatus (VO) according to one of Claims 7 to 11 and a communication apparatus (KV), which is connected to the apparatus (VO) for data transfer form a common functional unit for carrying out the method according to one of Claims 1 to 3.

13. "Energy cluster service" system (ECSY) according to Claim 12, wherein
the functional unit formed jointly from the apparatus (VO) and the communication apparatus (KV) is configured in such a way that for the data transfer data (ND, NSD, EPSPD, APD, NWD, WPD, STD) are transferred on a physical layer in accordance with the ISO/OSI reference model on the basis of a point-to-point connection in a line-based fashion (option "I"), e.g. via a metallic line or a fiber-optic cable, or via a free space connection (option "II"), e.g. mobile, short-range or satellite communications, and on a network layer and transport layer in accordance with the ISO/OSI reference model on the basis of an end-to-end connection between end systems of a communication network in a circuit-switched or packet-switched fashion, e.g. via the Internet on the basis of an IP/TCP protocol stack.

## Revendications

1. Procédé destiné à la gestion d'objectifs de régulation, en particulier de compensation de charge, dans un réseau d'énergie (EN) avec une pluralité de niveaux de connexion de réseau (NAE-A, ...NAE-M, NAE-N),
- qui sont respectivement couplés indirectement ou directement pour l'approvisionnement, la conversion, le stockage, l'alimentation, la distribution et/ou pour la consommation d'énergie, en particulier d'une énergie régionale, obtenue de manière centralisée et/ou locale, obtenue de manière décentralisée, à un marché de l'électricité (STM),
- dans lesquels respectivement au moins un cluster énergie (EC-A2, EC-x, EC-xM1, EC-xL2) est contenu avec respectivement au moins un prosommateur d'énergie (EP) approprié pour une communication technique dans le cluster énergie (EC-A2, EC-x, EC-xM1, EC-xL2) qui (i) produit, en particulier génère et émet ou procure, stocke et émet de nouveau, une énergie locale obtenue de manière décentralisée et/ou (ii) consomme une énergie locale ou régionale, et
- dans lesquels l'approvisionnement, la conversion, le stockage, l'alimentation, la distribution et/ou la consommation d'énergie s'effectuent au sein du cluster énergie (EC-A2, EC-x, EC-xM1, EC-xL2), à un niveau supérieur aux clusters et/ou à un niveau supérieur au niveau de connexion de réseau entre le cluster énergie (EC-A2, EC-x, EC-xM1, EC-xL2) et le marché de l'électricité (STM), dans lequel
**a)** un « service de cluster énergie » (ECS) destiné à l'utilisation optimisée du réseau d'énergie (EN) pour au moins un cluster énergie auto-organisateur (EC-xM1) avec respectivement l'au moins un prosommateur d'énergie (EP) qui est mis à disposition en ce qui concerne le « service de cluster énergie » (ECS) un membre de réseau d'énergie (ENT) et/ou un sous-cluster énergie (SEC, EC-xM11, EC-xM111, EC-xM1N1, EC-xM1N11, EC-xM1N12, EC-xM1N13, EC-xM1N111) contenu dans le cluster énergie auto-organisateur (EC-xM1), imbriqué par la technologie de communication avec celui-ci, pour une évaluation/optimisation contenant la gestion à réaliser en ce qui concerne le prosommateur d'énergie, dans lequel le cluster énergie (EC-xM1, SEC, EC-xM11, EC-xM111, EC-xM1N1, EC-xM1N11, EC-xM1N12, EC-xM1N13, EC-xM1N111) se comporte dans le réseau d'énergie (EN) de manière orientée réseau et utile au réseau, en particulier dans le sens d'une stabilisation du fonctionnement de réseau,
**b)** un modèle d'incitation-offre concernant le prosommateur d'énergie pour le « service de cluster énergie » (ECS) est utilisé, dans lequel les prosommateurs d'énergie (EP) sont dirigés dans le cluster énergie auto-organisateur (EC-xM1) sans action extérieure active sur des installations des prosommateurs d'énergie (EP) pour la production et/ou pour la consommation de l'énergie sur la base des incitations pour une décision propre et conformément à cette décision sont impliqués dans une participation volontaire, incitative et axée sur l'offre à un service de cluster énergie (ECS) et une offre active, qui en résulte, d'une demande temporelle en quantités d'énergie ou en capacités d'énergie,
**c)** des données de commande (STD) orientées offre ou incitatives sur la base du modèle d'incitation-offre concernant le prosommateur d'énergie pour le prosommateur d'énergie (EP, ENT, SEC, EC-xM11, EC-xM111, EC-xM1N1, EC-xM1N11, EC-xM1N12, EC-xM1N13, EC-xM1N111, SEC) participant au « service de cluster énergie » (ECS) sont générées en ce que conformément à la mise à disposition du « service de cluster énergie » (ECS) des données de réseau (ND) et des données de structure de réseau (NSD) du réseau d'énergie (EN) transmises pour la réalisation de l'évaluation/optimisation dans le sens d'un principe (PRI) commandé, régulé, orienté objectif et/ou d'auto-apprentissage, des données de structure/profil de « prosommateur d'énergie » (EPSPD), des données de profil de demande (APD) de cluster énergie supérieur et des données de marché et de l'économie spécifiques à l'énergie (MWD) sont analysées, en particulier de manière dynamique et sensiblement de manière continue.

2. Procédé selon la revendication 1, dans lequel les données de commande (STD) sont transmises par le prosommateur d'énergie (EP, ENT, SEC, EC-xM11, EC-xM111, EC-xM1N1, EC-xM1N11, EC-xM1N12, EC-xM1N13, EC-xM1N111) à intervalles de temps réguliers ou en fonction de l'état de puissance et de stockage spécifique au « prosommateur d'énergie » à la demande ou sur ordre au prosommateur d'énergie (EP, ENT, SEC, EC-xM11, EC-xM111, EC-xM1N1, EC-xM1N11, EC-xM1N12, EC-xM1N13, EC-xM1N111).

3. Procédé selon la revendication 1 ou 2, dans lequel l'évaluation/optimisation sur la base de l'analyse est réalisée avec un processus d'évaluation/optimisation (EOP) hébergé dans le cluster énergie auto-organisateur (EC-xM1) et/ou le sous-cluster énergie (SEC, EC-xM11, EC-xM111, EC-xM1N1, EC-xM1N11, EC-xM1N12, EC-xM1N13, EC-xM1N111) et se déroulant de manière centralisée.

4. Produit de programme informatique (CPP) destiné à la gestion d'objectifs de régulation, en particulier de compensation de charge, dans un réseau d'énergie (EN) avec une pluralité de niveaux de connexion de réseau (NAE-A, ...NAE-M, NAE-N),
- qui sont respectivement couplés directement ou indirectement pour l'approvisionnement, la conversion, le stockage, l'alimentation, la distribution et/ou pour la consommation d'énergie, en particulier d'une énergie régionale, obtenue de manière centralisée et/ou locale, obtenue de manière décentralisée, à un marché de l'électricité (STM),
- dans lesquels respectivement au moins un cluster énergie (EC-A2, EC-x, EC-xM1, EC-xL2) est contenu avec respectivement au moins un prosommateur d'énergie (EP) approprié pour une communication technique dans le cluster énergie (EC-A2, EC-x, EC-xM1, EC-xL2) qui (i) produit, en particulier génère et émet ou procure, stocke et émet de nouveau, une énergie locale obtenue de manière décentralisée et/ou (ii) consomme une énergie locale ou régionale, et
- dans lesquels l'approvisionnement, la conversion, le stockage, l'alimentation, la distribution et/ou la consommation d'énergie s'effectuent au sein du cluster énergie (EC-A2, EC-x, EC-xM1, EC-xL2), à un niveau supérieur aux clusters et/ou à un niveau supérieur au niveau de connexion de réseau entre le cluster énergie (EC-A2, EC-x, EC-xM1, EC-xL2) et le marché de l'électricité (STM), dans lequel
a) une mémoire lisible non volatile (SP), dans laquelle des instructions de programme de commande, lisibles par processeur, d'un module de programme réalisant la gestion des objectifs de régulation dans le réseau d'énergie (EN) sont mises en mémoire, et un processeur (PZ) relié à la mémoire (SP) sont prévus, dans lequel le processeur (PZ)
a1) met en oeuvre les instructions de programme de commande du module de programme (PGM) et
a2) de ce fait lorsque (i) un « service de cluster énergie » (ECS) pour l'utilisation optimisée du réseau d'énergie (EN) pour au moins un cluster énergie auto-organisateur (EC-xM1) avec respectivement l'au moins un prosommateur d'énergie (EP) qui en ce qui concerne le « service de cluster énergie » (ECS) est un participant à un réseau d'énergie (ENT) et/ou un sous-cluster énergie (SEC, EC-xM11, EC-xM111, EC-xM1N1, EC-xM1N11, EC-xM1N12, EC-xM1N13, EC-xM1N111) contenu dans le cluster énergie auto-organisateur (EC-xM1) imbriqué par la technologie de communication avec celui-ci, est mis à disposition pour une évaluation/optimisation comprenant la gestion à réaliser en ce qui concerne le prosommateur d'énergie individuellement par cluster, dans lequel le cluster énergie (EC-xM1, SEC, EC-xM11, EC-xM111, EC-xM1N1, EC-xM1N11, EC-xM1N12, EC-xM1N13, EC-xM1N111) se comporte dans le réseau d'énergie (EN) de manière orientée réseau et utile au réseau, en particulier dans le sens d'une stabilisation du fonctionnement de réseau et (**ii**) un modèle d'incitationoffre concernant le prosommateur d'énergie pour le « service de cluster énergie » (ECS) est utilisé, dans lequel les prosommateurs d'énergie (EP) dans le cluster énergie auto-organisateur (EC-xM1) sont dirigés sans action extérieure active sur des installations des prosommateurs d'énergie (EP) pour la production et/ou pour la consommation de l'énergie sur la base des incitations pour une décision propre et sont impliqués conformément à cette décision dans une participation volontaire, incitative et axée sur l'offre à une participation au « service de cluster énergie » (ECS) et une offre active, qui en résulte, d'une demande temporelle de quantités d'énergie ou de capacités d'énergie,
pour le prosommateur d'énergie (EP, ENT, SEC, EC-xM11, EC-xM111, EC-xM1N1, EC-xM1N11, EC-xM1N12, EC-xM1N13, EC-xM1N111, SEC) participant au « service de cluster énergie » et sur des données de commande (STD) orientées offre/incitatives sur la base du modèle d'incitation-offre concernant le prosommateur d'énergie sont générées en ce que conformément à la mise à disposition du « service de cluster énergie » (ECS) des données de réseau (ND) et des données de structure de réseau (NSD) du réseau d'énergie (EN) transmises pour la réalisation de l'évaluation/optimisation dans le sens d'un principe (PRI) commandé, régulé, orienté objectif et/ou d'auto-apprentissage, des données de structure/profil de « prosommateur d'énergie » (EPSPD), des données de profil de demande (APD) de cluster énergie supérieur et des données de marché et de l'économie spécifiques à l'énergie (MWD) sont analysées, en particulier de manière dynamique et sensiblement de manière continue, par le prosommateur d'énergie participant (EP, ENT, SEC, EC-xM11, EC-xM111, EC-xM1N1, EC-xM1N11, EC-xM1N12, EC-xM1N13, EC-xM1N111).

5. Produit de programme informatique (CPP) selon la revendication 4, dans lequel le processeur (PZ) et le module de programme (PGM) sont configurés de telle sorte que les données de commande (STD) sont transmises par le prosommateur d'énergie (EP, ENT, SEC, EC-xM11, EC-xM111, EC-xM1N1, EC-xM1N11, EC-xM1N12, EC-xM1N13, EC-xM1N111) à intervalles de temps réguliers ou en fonction de l'état de puissance et de mémoire spécifique au « prosommateur d'énergie » à la demande ou sur ordre au prosommateur d'énergie (EP, ENT, SEC, EC-xM11, EC-xM111, EC-xM1N1, EC-xM1N11, EC-xM1N12, EC-xM1N13, EC-xM1N111).

6. Produit de programme informatique (CPP) selon la revendication 4 ou 5, dans lequel le processeur (PZ) et le module de programme (PGM) sont configurés de telle sorte que l'évaluation/optimisation sur la base de l'analyse est réalisée avec un processus d'évaluation/optimisation (EOP).

7. Dispositif (VO) destiné à la gestion d'objectifs de régulation, en particulier de compensation de charge, dans un réseau d'énergie (EN) avec une pluralité de niveaux de connexion de réseau (NAE-A, ...NAE-M, NAE-N),
- qui sont respectivement couplés indirectement ou directement pour l'approvisionnement, la conversion, le stockage, l'alimentation, la distribution et/ou pour la consommation d'énergie, en particulier d'une énergie régionale, obtenue de manière centralisée et/ou locale, obtenue de manière décentralisée, à un marché de l'électricité (STM),
- dans lesquels respectivement au moins un cluster énergie (EC-A2, EC-x, EC-xM1, EC-xL2) est contenu avec respectivement au moins un prosommateur d'énergie (EP) approprié pour une communication technique dans le cluster énergie (EC-A2, EC-x, EC-xM1, EC-xL2) qui (i) produit, en particulier génère et émet ou procure, stocke et émet de nouveau, une énergie locale obtenue de manière décentralisée et/ou (**ii**) consomme une énergie locale ou régionale, et
- dans lesquels l'approvisionnement, la conversion, le stockage, l'alimentation, la distribution et/ou la consommation d'énergie s'effectuent au sein du cluster énergie (EC-A2, EC-x, EC-xM1, EC-xL2), à un niveau supérieur aux clusters et/ou à un niveau supérieur au niveau de connexion de réseau entre le cluster énergie (EC-A2, EC-x, EC-xM1, EC-xL2) et le marché de l'électricité (STM), dans lequel
un dispositif de commande (STE) est prévu, qui contient un produit de programme informatique (CPP) destiné à la gestion d'objectifs de régulation dans le réseau d'énergie (EN) avec une mémoire lisible non volatile (SP), dans laquelle des instructions de programme lisibles par processeur d'un module de programme (PGM) réalisant la gestion des objectifs de régulation sont stockées, et un processeur (PZ) relié à la mémoire (SP) et qui met en oeuvre les instructions de programme de commande du module de programme (PGM) et qui est relié à un dispositif de communication (KE) et de ce fait forme avec le dispositif de communication (KE) une unité fonctionnelle commune de telle sorte que lorsque
**(i)** un « service de cluster énergie » (ECS) destiné à l'utilisation optimisée du réseau d'énergie (EN) pour au moins un cluster énergie auto-organisateur (EC-xM1) avec respectivement l'au moins un prosommateur d'énergie (EP) qui est en ce qui concerne le « service de cluster énergie » (ECS) un membre de réseau d'énergie (ENT) et/ou un sous-cluster énergie (SEC, EC-xM11, EC-xM111, EC-xM1N1, EC-xM1N11, EC-xM1N12, EC-xM1N13, EC-xM1N111) contenu dans le cluster énergie auto-organisateur (EC-xM1) et imbriqué par la technologie de communication avec celui-ci, pour une évaluation/optimisation individuellement par cluster comprenant la gestion à réaliser en ce qui concerne le prosommateur d'énergie, dans lequel le cluster énergie (EC-xM1, SEC, EC-xM11, EC-xM111, EC-xM1N1, EC-xM1N11, EC-xM1N12, EC-xM1N13, EC-xM1N111) se comporte dans le réseau d'énergie (EN) de manière orientée réseau et utile au réseau, en particulier dans le sens d'une stabilisation du fonctionnement de réseau, et
**(ii)** un modèle d'incitation-offre concernant le prosommateur d'énergie pour le « service de cluster énergie » (ECS) est utilisé, dans lequel les prosommateurs d'énergie (EP) sont dirigés dans le cluster énergie auto-organisateur (EC-xM1) sans action extérieure active sur des installations des prosommateurs d'énergie (EP) pour la production et/ou pour la consommation de l'énergie sur la base des incitations pour une décision propre et sont impliqués conformément à cette décision dans une participation volontaire, incitative et axée sur l'offre à un service de cluster énergie (ECS) et une offre active, qui en résulte, d'une demande temporelle en quantités d'énergie ou en puissances d'énergie,
des données de commande (STD) orientées offre ou incitatives pour le prosommateur d'énergie (EP, ENT, SEC, EC-xM11, EC-xM111, EC-xM1N1, EC-xM1N11, EC-xM1N12, EC-xM1N13, EC-xM1N111, SEC) participant au « service de cluster énergie » (ECS) et sur la base du modèle d'incitation-offre concernant le prosommateur d'énergie pour le prosommateur d'énergie sont générées en ce que conformément à la mise à disposition du « service de cluster énergie » (ECS) pour la réalisation de l'évaluation/optimisation dans le sens d'un principe (PRI) commandé, régulé, orienté objectif et/ou d'auto-apprentissage via les données de réseau (ND) et les données de structure de réseau (NSD) du réseau d'énergie (EN) , les données de structure/profil de « prosommateur d'énergie » (EPSPD), les données de profil de demande (APD) de cluster énergie supérieur et les données de marché et de l'économie spécifiques à l'énergie (MWD) transmises pour la réalisation de l'évaluation/optimisation sont analysées, en particulier de manière dynamique et sensiblement de manière continue, par le prosommateur d'énergie participant (EP, ENT, SEC, EC-xM11, EC-xM111, EC-xM1N1, EC-xM1N11, EC-xM1N12, EC-xM1N13, EC-xM1N111, SEC).

8. Dispositif (VO) selon la revendication 7, dans lequel l'unité de commande (STE) avec le processeur (PZ) et le module de programme (PGM) dans le produit de programme informatique (CPP) et le dispositif de communication (KE) sont configurés de telle sorte que les données de commande (STD) sont transmises par le prosommateur d'énergie (EP, ENT, SEC, EC-xM11, EC-xM111, EC-xM1N1, EC-xM1N11, EC-xM1N12, EC-xM1N13, EC-xM1N111) à intervalles de temps réguliers ou en fonction de l'état de puissance et de stockage spécifique au « prosommateur d'énergie » à la demande ou sur ordre au prosommateur d'énergie (EP, ENT, SEC, EC-xM11, EC-xM111, EC-xM1N1, EC-xM1N11, EC-xM1N12, EC-xM1N13, EC-xM1N111).

9. Dispositif (VO) selon la revendication 7 ou 8, dans lequel le processeur (PZ) et le module de programme (PGM) sont configurés dans le produit de programme informatique (CPP) de l'unité de commande (STE) de telle sorte que l'évaluation/optimisation sur la base de l'analyse est réalisée au moyen d'un processus d'évaluation/optimisation (EOP) .

10. Dispositif (VO) selon la revendication 7, 8 ou 9, dans lequel le dispositif de communication (KE) est configuré en tant qu'interface de communication avec un prosommateur d'énergie (EP, ENT, SEC, EC-xM11, EC-xM111, EC-xM1N1, EC-xM1N11, EC-xM1N12, EC-xM1N13, EC-xM1N111) qui envoie et/ou reçoit pour une transmission de données, l'envoi ou la réception de données (ND, NSD, EPSPD, APD, NWD, WPD, STD) par exemple vers ou depuis le prosommateur d'énergie (EP, ENT, SEC, EC-xM11, EC-xM111, EC-xM1N1, EC-xM1N11, EC-xM1N12, EC-xM1N13, EC-xM1N111), les données (ND, NSD, EPSPD, APD, NWD, WPD, STD) sur une couche physique conformément au modèle de référence ISO/OSI sur la base d'une liaison point à point par liaison par câble (option « I »), par exemple via une ligne métallique ou un câble en fibre de verre, ou via une liaison par espaces libres (option « II »), par exemple une téléphonie mobile, une diffusion de courte portée ou une diffusion par satellite, et d'une couche de réseau et d'une couche de transport conformément au modèle de référence ISO/OSI sur la base d'une liaison de bout en bout entre des systèmes finaux d'un réseau de communication par communication câblée ou communication par paquets, par exemple via Internet sur la base d'une pile de protocoles IP/TCP.

11. Dispositif (VO) selon l'une quelconque des revendications 7 à 10, dans lequel un serveur est disposé dans une interface du réseau d'énergie (EN), comme par exemple dans une boîte de distribution de réseau, un poste de transformateur de réseau ou une sous-station de réseau.

12. Système de « service de cluster énergie » (ECSY) destiné à la gestion d'objectifs de régulation, en particulier de compensation de charge, dans un réseau d'énergie (EN) avec une pluralité de niveaux de connexion de réseau (NAE-A, ...NAE-M, NAE-N),
- qui sont respectivement couplés indirectement ou directement pour l'approvisionnement, la conversion, le stockage, l'alimentation, la distribution et/ou pour la consommation d'énergie, en particulier d'une énergie régionale, obtenue de manière centralisée et/ou locale, obtenue de manière décentralisée, à un marché de l'électricité (STM),
- dans lesquels respectivement au moins un cluster énergie (EC-A2, EC-x, EC-xM1, EC-xL2) est contenu avec respectivement au moins un prosommateur d'énergie (EP) approprié pour une communication technique dans le cluster énergie (EC-xM1, EC-xL2) qui (i) produit, en particulier génère et émet ou procure, stocke et émet de nouveau, une énergie locale obtenue de manière décentralisée et/ou (ii) consomme une énergie locale ou régionale et qui présente un dispositif de communication (KV) pour la communication technique, et
- dans lesquels l'approvisionnement, la conversion, le stockage, l'alimentation, la distribution et/ou la consommation d'énergie s'effectuent au sein du cluster énergie (EC-A2, EC-x, EC-xM1, EC-xL2), à un niveau supérieur aux clusters et/ou à un niveau supérieur au niveau de connexion de réseau entre le cluster énergie (EC-A2, EC-x, EC-xM1, EC-xL2) et le marché de l'électricité (STM),
dans lequel
un dispositif (VO) selon l'une quelconque des revendications 7 à 11 et un dispositif de communication (KV) qui est relié au dispositif (VO) pour une transmission de données forment une unité fonctionnelle commune pour la réalisation du procédé selon l'une quelconque des revendications 1 à 3.

13. Système de « service de cluster énergie » (ECSY) selon la revendication 12, dans lequel l'unité fonctionnelle formée de manière commune à partir du dispositif (VO) et du dispositif de communication (KV) est configurée de telle sorte que pour la transmission de données des données (ND, NSD, EPSPD, APD, NWD, WPD, STD) sont transmises sur une couche physique conformément au modèle de référence ISO/OSI sur la base d'une liaison point à point par liaison par câble (option « I »), par exemple via une ligne métallique ou un câble en fibre de verre, ou via une liaison par espaces libres (option « II »), par exemple la téléphonie mobile, la diffusion de courte portée ou la diffusion par satellite, et sur une couche de réseau et une couche de transport conformément au modèle de référence ISO/OSI sur la base d'une liaison de bout en bout entre des systèmes finaux d'un réseau de communication par communication câblée ou communication par paquets, par exemple via Internet sur la base d'une pile de protocoles IP/TCP.
